# EUROPEAN PATENT SPECIFICATION

(11) **EP 1 661 325 B1**
(45) Date of publication and mention of the grant of the patent: **29.10.2008**
(21) Application number: 03818499.0
(22) Date of filing: 05.09.2003
(51) Int. Cl.: H04L 12/46, H04L 29/12

(54) **COMMUNICATION BETWEEN FIXED TERMINALS OF AN IPV4 PRIVATE NETWORK AND AN IPV6 GLOBAL NETWORK INTERCONNECTED THROUGH THE IPV4-INTERNET**
KOMMUNIKATION ZWISCHEN FESTEN ENDGERÄTEN EINES PRIVATEN IPV4-NETZWERKS UND EINES GLOBALEN IPV6-NETZWERKS, DIE DURCH DAS IPV4-INTERNET VERBUNDEN SIND
COMMUNICATION ENTRE DES TERMINAUX FIXES D'UN RESEAU PRIVE IPV4 ET D'UN RESEAU GLOBAL IPV6 INTERCONNECTES PAR L'INTERMEDIAIRE DE L'INTERNET IPV4

(43) Date of publication of application: 31.05.2006
(73) Proprietor: NTT DoCoMo, Inc., Chiyoda-ku Tokyo 100-6150 (JP)
(72) Inventor: THAKOLSRI, Srisakul, 81379 München (DE); MINOKUCHI, Atsushi, Kanagawa-ken 239-0847 (JP); PREHOFER, Christian, 81477 München (DE); HORI, Kazumasa, Tokyo 144-0052 (JP)
(74) Representative: HOFFMANN EITLE
(86) International application number: PCT/EP2003/009874
(87) International publication number: WO 2005/025141

(56) References cited:
- WO-A-01/31888
- WO-A-02/078253
- US-A1- 2002 194 259
- JAMHOUR E ET AL: "TIP6: a transition mechanism for implementing mobile networks" IEEE INTERNATIONAL CONFERENCE ON COMPUTER COMMUNICATION AND NETWORKS, 14 October 2002 (2002-10-14), pages 342-347, XP010610902
- C. HUITEMA: "Tunnelling IPv6 over UDP through NATs" INTERNET DRAFT: <DRAFT-HUITEMA-V6OPS-TEREDO-00.TXT>, 6 June 2003 (2003-06-06), XP002282687

## Description

### FIELD OF THE INVENTION

The invention relates to a communication method, a communication terminal and a gateway in a communication system, which comprises several networks having different protocols and/or address spaces. The invention in particular relates to a communication situation for IP-based networks when two fixed terminals respectively belonging to two networks have been implemented using different IP-protocol versions and communicate through another network such as the Internet. More particularly, the invention relates to the communication between the two fixed terminals in.a communication system in which a network to which a first fixed terminal belongs and the interconnection network connecting the network of the first fixed terminal to the network of the second fixed terminal are implemented using the same protocol version but with a separate address space.

The present invention in particular relates to the problem how a first terminal can establish communication to a second terminal through two networks having the same protocol version but a different address space and through the network to which the second terminal belongs. The different networks may be Internet Protocol (IP) implemented networks in which different versions of the Internet Protocol like IPv4 and IPv6 may coexist as will be explained below with more details.

However, it should be noted that the invention generally relates to networks having different protocols and different address spaces and that the explanations made here are not restricted to Internet Protocol implemented networks.

### BACKGROUND OF THE INVENTION

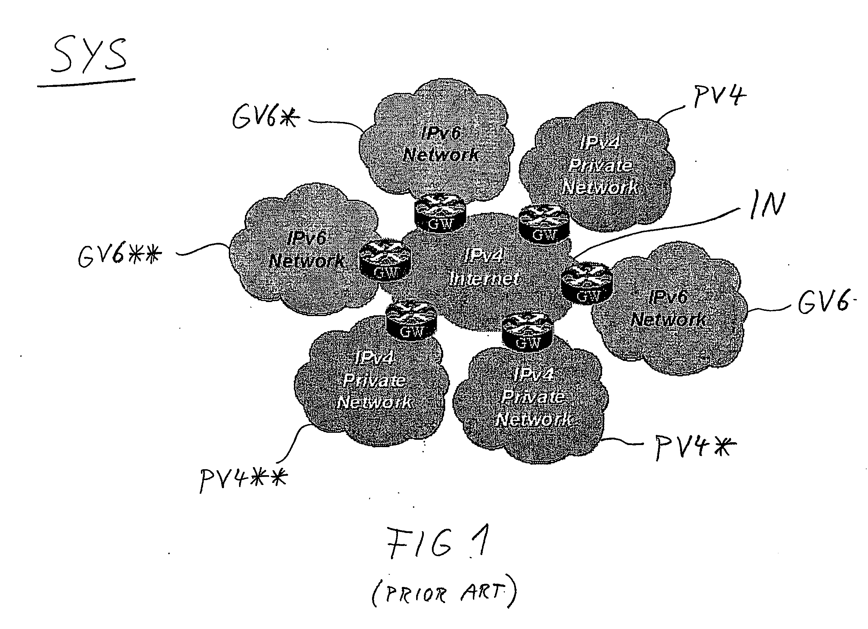

Fig. 1 shows communication system SYS in accordance with the prior art. As shown in Fig. 1, the communication system SYS can comprise a first network IN implemented using a first protocol such as the Internet Protocol IPv4 (the first network may be the global Internet), three second networks GV6*; GV6**; GV6 implemented using second protocol such as the Internet Protocol IPv6 and a third and fourth network PV4; PV4** implemented using said first protocol such as IPv4. As shown in Fig. 1, the first network IN (IPv4 Internet) is connected through respective gateways GW to the other networks. The function of such gateways GW is known to the skilled person and the gateways GW typically perform a protocol conversion between IPv6 and IPv4 networks and the address conversion. The configuration in Fig. 1 is typical during the IPv4 - IPv6 transition period where it is expected that the IPv4 private network and the IPv6 network or networks will coexist. Typically, since the first and second protocols IPv4, IPv6 are different and cannot interoperate, some transition solutions are necessary to enable transport communication between the existing IPv4 network and the upcoming IPv6 networks.

However, problems exist for the interoperability in Fig. 1 not only because of the usage of different protocols IPv4 and IPv6 in different networks but also due to usage of addresses in respective networks. For example, in principle the third and fourth networks PV4, PV4** use the same first protocol IPv4 as the first network IN such that in principle interoperability could exist. However, whilst for example the first and fourth networks IN, PV4 use the first protocol IPv4 for addressing in said first and fourth networks IN, IPv4, the first and fourth addresses are respectively first protocol first network addresses and first protocol fourth network addresses selected from different address ranges of the first protocols (this is what is indicated with the expression "private" in the fourth network PV4). That is, although the networks IN, PV4, PV4** use the same type of addresses (because the same protocol IPv4 is used for the addressing in these networks), a user or a communication terminal in the first network IN has no general knowledge and usage of the address range which is respectively reserved for the third and fourth networks PV4, PV4**. The fact that the first and fourth addresses are selected from different address ranges is indicated with the wording "private" in the third and fourth networks PV, PV**.

On the other hand, regarding the usage of addresses, the second networks GV6; GV6*; GV6** use the second protocol IPv6 for addressing and they globally share the same address space, i.e. there are no reserved "private" addresses.

In the communication system SYS in Fig. 1 there are several incompatibilities for the interoperability regarding the usage of protocols and the usage of addresses. For example, problems regarding the interoperability occur when a mobile communication terminal registered in one of the networks connected to the first network IN roams to another network. In particular, it may not be possible for such a mobile communication terminal to register itself in the new (roamed to) network and it might not be reachable by another mobile communication terminal or might not be capable of transmitting information to such another mobile communication terminal. Of course, as may be appreciated already from Fig. 1, a mobile communication terminal for example roaming from the IPv4 private network PV4** to a IPv6 network GV6 needs to be a dual-stack protocol mobile communication terminal in order to allow an operation in the two networks respectively having different protocols. However, in addition to the usage of a dual-stack (dual protocol) mobile communication terminal, procedures must be established for allowing the routing of for example IPv6 information through a IPv4 protocol network, for example when two mobile communication terminals of the networks GV6* and GV6** communicate by routing information through the internet IN. Different scenarios of such roaming procedures and communication scenarios can be distinguished when a mobile communication terminal is moving across the network scenario in Fig. 1. This calls for more dedicated transition mechanisms enabling the communication between different IP-protocols for such a roaming or moving terminal. Our two parallel PCT-applications PCT/EP 2003/009873 and PCT/EP 2003/009875, filed concurrently with the present application and in the name of the same applicant relate to the provision of solutions of the communication/registration problems in roaming scenarios in Fig. 1, e.g. if mobile communication terminals roam to different protocol networks.

However, communication problems do not only occur in the roaming scenario but also when a communication takes place between fixed terminals. As a skilled person in the art knows, a fixed terminal - in contrast to a mobile terminal - is fixed in its location and therefore does not require any location update procedures or registration procedures because it remains geographically fixed once it is connected to the network. During a network session, however, its location remains fixed.

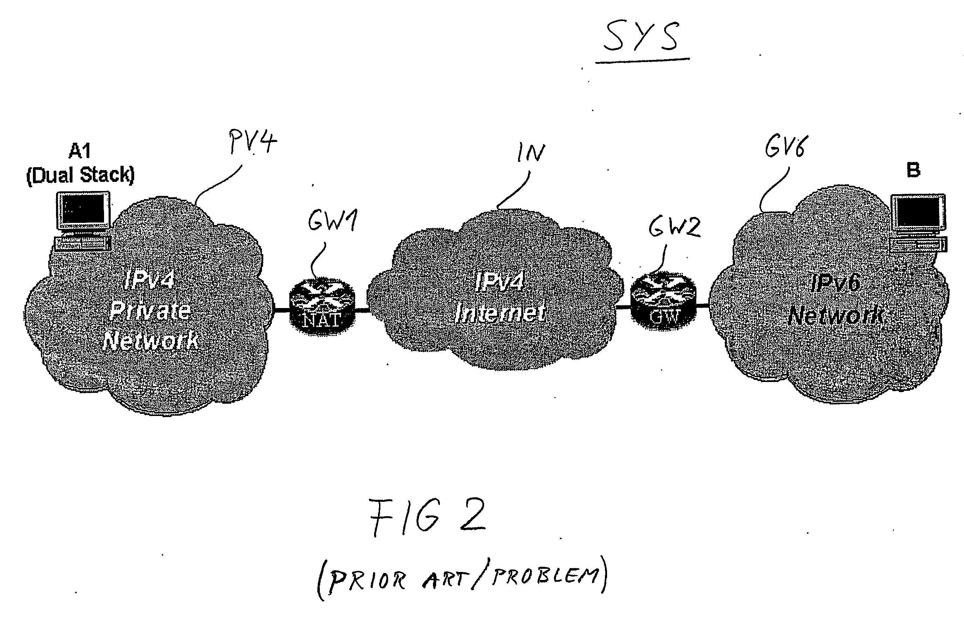

A typical network scenario of a communication between two fixed communication terminals A1, B is shown in Fig. 2. In a communication system SYS in Fig. 2 the IPv4 - IPv6 transition network scenario comprises a first network IN implemented using a first protocol IPv4 (IN can be the global existing IPv4 Internet), said first network IN being connected to a second network PV4 implemented using the first protocol IPv4 and a third network GV6 implemented using a second protocol IPv6 through a respective first and second gateway GW1, GW2. The networks PV4, IN, GV6 are used in order to provide communication information between the first fixed terminal A1 of the second network PV4 and the second fixed terminal B of the third network GV6. The first and second protocols, such as IPv4, IPv6, are different and the first and second networks IN, PV4 use the first protocol IPv4 for addressing in said first and second networks IN, PV4. The third network GV6 uses the second protocol, such as IPv6, for addressing in the third network GV6. The first to third networks IN, PV4, GV6 respectively comprise first, second and third addresses, wherein the first and second addresses being respectively first protocol first network addresses and first protocol second network addresses respectively selected from different address ranges of the first protocol IPv4. The third addresses are second protocol third network addresses. Thus, quite clearly in the communication system SYS the second network PV4 uses the same protocol IPv4 as the first network IN but it has a reserved address space indicated with "private" network in Fig. 2.

In the prior art network scenario in Fig. 2 a communication initiated by the fixed terminal B can be successfully established because of the NAT located in the first gateway GW1 between the first network IN and the second network PV4. Such a Network Address Translator NAT is conventionally provided in conventional gateways and essentially provides a conversion between first protocol first network addresses and first protocol second network addresses to allow a communication from the first terminal A1 to the second gateway BGW via the first gateway AGW. The usage of such a Network Address Translator NAT is described in our aforementioned PCT-application PCT/EP2003/009873 filed concurrently with the present application. Of course, the second terminal B will transmit second protocol IPv6 communication information to the first terminal A1 and therefore, in addition to the usage of the NAT, the first terminal A1 is necessarily a dual stack (dual protocol) terminal because on the one hand it must be capable to communicate (send/transmit) first protocol IPv4 communication information to other terminals of the second network PV4, and on the other hand it must be capable of "understanding" (decoding) the second protocol IPv6 information from the second terminal B. However, in the prior art there is no solution given for the communication problem when the communication is initiated by the first terminal A1 to the second terminal B. Only the usage of a virtual private network (VPN) is a possible solution to the communication problem when a communication is initiated by the fixed terminal A1.

The prior art includes international application WO 01/31888 A1*,* which discloses a dual network address utilization system. The system includes an IPv4 Internet backbone, an IPv4/IPv6 dual protocol stack subnet and an IPv6 only subnet. Communication over the backbone uses an IPv4 virtual tunnel. A local virtual tunnel is created on the IPv4/IPv6 dual protocol stack subnet for some data packets.

### SUMMARY OF THE INVENTION

As explained with reference to Fig. 1 and Fig. 2, in a communication system SYS of Fig. 2, there is a communication problem when the first communication terminal A1 which is a fixed terminal initiates communication to second terminals been which is also a fixed terminal.

Therefore, the aim of the present invention is to overcome the aforementioned described disadvantages. In particular, it is the object of the present invention to provide a communication method, a communication terminal, a gateway and a communication system which allow that a communication to the second terminal is initiated by the first terminal wherein the first and second terminals are respectively connected to networks of different protocols which are interconnected through gateways and another network which is implemented using the same protocol as that of the network to which the first terminal is connected.

The communication method of the invention, the communication system of the invention, the program of the invention and the computer program product of the invention are defined in the independent claims. Embodiments are defined in the dependent claims. Further aspects are described below.

According to one aspect, the communication method is provided in a communication system including a first network implemented using a first protocol, said first network being connected to a second network implemented using said first protocol and a third network implemented using a second protocol through a respective first and second gateway, for providing communication information between a first terminal of said second network and a second terminal of said third network; said first and second protocols being different; said first and second networks using said first protocol for addressing in said first and second networks; said third network using said second protocol for addressing in said third network; said first to third networks respectively comprising first to third addresses; said first and second addresses being respectively first protocol first network addresses and first protocol second network addresses respectively selected from different address ranges of said first protocol; said third addresses being second protocol third network addresses;
wherein said communication method comprises the following steps: setting up a first protocol first tunnel between said first terminal and said first gateway; transmitting at least said communication information through said first protocol first tunnel; receiving at least said-communication information in said first gateway; setting up a first protocol second tunnel between said first gateway and said second gateway; transmitting at least said communication information through said first protocol second tunnel; receiving at least said communication information in said second gateway; transmitting at least said communication information through said third network to said second terminal.

According to one aspect, the communication terminal is provided for providing communication between said communication terminal and.another terminal, said communication terminal belonging to a second network implemented using a first protocol, and said other terminal belonging to a third network implemented using a second protocol, wherein said communication is provided through a first network implemented using said first protocol different from said second protocol, said second and third networks being connected to said first network through a respective first and second gateway; said first and second networks using said first protocol for addressing in said first and second networks; said third network using said second protocol for addressing, in said third network; said first to third networks respectively comprising first to third addresses; said first and second addresses being respectively first protocol first network addresses and first protocol second network addresses respectively selected from different address ranges of said first protocol; said third addresses being second protocol third network addresses; wherein said communication terminal is capable of communicating using said first protocol and said second protocol; said communication terminal comprises a tunnel set up unit for setting up a first-protocol tunnel between said communication terminal and said first gateway.

According to one aspect, the gateway is provided in a communication system including a first network implemented using a first protocol, said first network being connected to a second network implemented using said first protocol and a third network implemented using a second protocol respectively through a first gateway and said gateway forming a second gateway, for providing communication information between a first terminal of said second network and a second terminal of said third network; said first and second protocols being different; said first and second networks using said first protocol for addressing in said first and second networks; said-third network using said second protocol for addressing in said third network; said first to third networks respectively comprising first to third addresses; said first and second addresses being respectively first protocol first network addresses and first protocol second network addresses respectively selected from different address ranges of said first protocol; said third addresses being second protocol third network addresses, wherein said gateway comprises a conversion unit adapted to convert between a second protocol third network first terminal address and a pair of a first protocol first network first gateway address and a first protocol first network transport type specific information.

Furthermore, the object is solved by a communication system including a first network implemented using a first protocol, said first network being connected to a second network implemented using said first protocol and a third network implemented using a second protocol through a respective first and second gateway, for providing communications between a first terminal of said second network and a second terminal of said third network; said first and second protocols being different; said first and second networks using said first protocol for addressing in said first and second networks; said third network using said second protocol for addressing in said third network; said first to third networks respectively comprising first to third addresses; said first and second addresses being respectively first protocol first network addresses and first protocol second network addresses respectively selected from different address ranges of said first protocol; said third addresses being second protocol third network addresses; wherein said first terminal is capable of communicating using said first protocol and said second protocol; said first terminal comprises a first tunnel set up unit for setting up as first protocol first tunnel between said first terminal and said first gateway; said first gateway between said second and first networks comprises a second tunnel set up unit for setting up a first protocol second tunnel between said first gateway and said second gateway, and a fourth tunnel set up unit for setting up.a first protocol fourth tunnel between said first gateway and said first terminal; said second gateway between said first and third networks comprises a third tunnel set up unit for setting up a first protocol third tunnel between said second gateway and said first gateway.

Essentially, in accordance with the invention, a first protocol first tunnel is used between the first terminal and the first gateway and a first protocol second tunnel is used between the first gateway and the second gateway in order to encapsulate the second protocol communication information into a respective first protocol tunnel. In this manner, communication information from the first terminal is essentially encapsulated in the two tunnels and is decapsulated at the second gateway, which then transmits the communication information through the third network to the second terminal. The usage of the tunnels circumvents the usage of a virtual private network.

Preferably, in the communication method said step a) includes encapsulating of at least said communication information with a transport type identifying first header at least including second protocol transport type specific information, with a second-protocol first header at least including a second protocol third network first terminal address and a second protocol third network second terminal address, with a transport type identifying second header at least including first protocol second network transport type specific information, and with a first-protocol first header at least including a first protocol second network first terminal address and a first protocol first network second gateway address.

Preferably, in the communication method said step d) includes changing said transport type identifying second header to a transport type identifying third header at least including first protocol first network transport type specific information, and changing said first-protocol first header to a first-protocol second header at least including a first protocol first network first gateway address and said first protocol first network second gateway address.

Preferably, in the communication method said step f) includes storing said first protocol first network first gateway address, said first protocol first network transport type specific information, and said second protocol third network first terminal address in said second gateway.

Preferably, in the communication method said first protocol first network first gateway address, said first protocol first network transport type specific information, and said second protocol third network first terminal address are stored in a mapping table.

Preferably, in the communication method in said mapping table a mapping correlation is stored between said second protocol third network first terminal address and a pair of said first protocol first network first gateway address and said first protocol first network transport type specific information.

Preferably, in the communication method said step f) includes decapsulating said communication information at least from said first-protocol second header.

Preferably, the communication method further comprises the following steps: transmitting from said second terminal at least a response communication information through said third network to said second gateway; receiving at least said response communication information in said second gateway; setting up a first protocol third tunnel between said second gateway and said first gateway; transmitting at least said response communication information through said first protocol third tunnel; receiving at least said response communication information in said first gateway; setting up a first protocol fourth tunnel between said first gateway and said first terminal; transmitting at least said response communication information through said first protocol fourth tunnel; receiving at least said response communication information in said first terminal.

Preferably, in the communication method before said step h) said response communication information is at least encapsulated with a transport type identifying fourth header at least including said second protocol third network transport type specific information and with a second-protocol second header at least including said second protocol third network first terminal address.

Preferably, in the communication method said step j) includes encapsulating of at least said response communication information with a transport type identifying fifth header at least including said first protocol first network transport type specific information, and with a first-protocol third header at least including said first protocol first network first gateway address according to said mapping correlation.

Preferably, in the communication method said step m) includes changing said transport type identifying fifth header to a transport type identifying sixth header at least including said first protocol second network transport type specific information, and changing said first-protocol third header to a first-protocol fourth header at least including said first protocol second network first terminal address.

Preferably, in the communication method said step o) includes determining whether a received packet comprises a transport type identifying header including said first protocol second network transport type specific information.

Preferably, in the communication method, when it is determined that said received packet comprises a transport type identifying header including said first protocol second network transport type specific information, said response communication information is decapsulated at least from said first-protocol fourth header and said transport type identifying sixth header.

Preferably, the communication terminal further comprises a transmitting unit for transmitting at least a communication information to said other terminal through said first-protocol tunnel.

Preferably, the communication terminal further comprises a receiving unit for receiving a response communication information from said second terminal.

Preferably; the communication terminal further comprises a storage unit for storing at least a first protocol second network first terminal address and a second protocol third network first terminal address.

Preferably, the communication terminal further comprises an encapsulating unit for encapsulating of at least said communication information with a transport type identifying first header at least including second protocol transport type specific information, with a second-protocol first header at least including a second protocol third network first terminal address and a second protocol third network second terminal address, with a transport type identifying second header at least including first protocol second network transport type specific information, and with a first-protocol first header at least including a first protocol second network first terminal address and a first protocol first network second gateway address.

Preferably, the communication terminal further comprises a determining unit for determining whether a received packet comprises a transport type identifying header including a first protocol second network transport type specific information.

Preferably, the communication terminal further comprises a decapsulating unit for decapsulating said response communication information at least from said transport type identifying header including said first protocol second network transport type specific information.

Preferably, in the communication terminal said decapsulating unit only decapsulates said response communication information, when said determining unit has determined that said received packet comprises said transport type identifying header including said first protocol second network transport type specific information.

Preferably, the gateway further comprises a tunnel set up unit for setting up a first-protocol tunnel between said gateway and said first gateway.

Preferably, the gateway further comprises a storage unit for storing a first protocol first network first gateway address, a first protocol first network transport type specific information, and a second protocol third network first terminal address.

Preferably, in the gateway said first protocol first network first gateway address, said first protocol first network transport type specific information, and said second protocol third network first terminal address are stored in a mapping table.

Preferably, in the gateway in said mapping table a mapping correlation is stored between said second protocol third network first terminal address and a pair of said first protocol first network first gateway address and said first protocol first network transport type specific information.

Preferably, in the communication system said first terminal further comprises a storage unit for storing at least a first protocol second network first terminal address and a second protocol third network first terminal address.

Preferably, in the communication system said second gateway comprises a storage unit for storing a first protocol first network first gateway address, a first protocol first network transport type specific information, and a second protocol third network first terminal address.

Preferably, in the communication system said first gateway comprises a storage unit for storing a first protocol second network first terminal address, a first protocol second network transport type specific information, a first protocol first network first gateway address, and a first protocol first network transport type specific information.

The program has instructions adapted to carry out one or more of the method steps of any one or more of the method claims 1 to 12. The computer program product stored on a computer readable medium comprises code means adapted to carry out one or more of the method steps of any one or more of the method claims 1 to 12.

Further advantageous embodiments and improvements of the invention may be taken from the dependent claims. Furthermore, it should be noted that the invention comprises further embodiments and examples, which result from a combination of steps and features, which have been separate described in the specification and the claims.

Furthermore, it should be noted that what is described hereinafter is only considered to be the best mode of the invention as currently conceived by the inventors. However, the invention might comprise other embodiments, which may be derived by the skilled person on the basis of the teachings herein.

### BRIEF DESCRIPTION OF THE DRAWINGS

In the drawings:
- Fig. 1: shows an overview of a communication system SYS comprising a plurality of networks which are implemented using different protocol versions such as IPv4 and IPv6;
- Fig. 2: shows a communication system SYS in which three networks IN, PV4, GV6 are interconnected through two gateways GW1, GW2 for providing a communication between a first terminal A1 and a second terminal B;
- Fig. 3: shows the usage of tunnels TUN', TUN" to the second and first networks PV4, IN in accordance with the principle of the invention, for allowing a communication to be initiated by the first terminal A1 to the second terminal B;
- Fig. 4: shows an embodiment of the second gateway BGW shown in Fig. 3, in accordance with the invention;
- Fig. 5: shows a block diagram of an embodiment of the first terminal A1, in accordance with the invention;
- Fig. 6: shows a block diagram of the first gateway AGW shown in Fig. 3, for allowing the communication between the first terminal A1 and the second terminal B;
- Fig. 7: shows a flow chart of a communication method using tunnels TUN', TUN", in accordance with the invention;
- Fig. 8: a diagram illustrating the set-up of tunnels for the forward (first terminal A1 to second terminal B) and backward (second terminal B to first terminal A) communication, in particular the numbering of the tunnels;
- Fig. 9a: shows an example of an encapsulated communication packet COMM1 sent by the first terminal A1;
- Fig. 9b: shows an example of an encapsulated communication packet COMM2 sent by the first gateway AGW;
- Fig. 9c: shows an example of an encapsulated packet (a response packet) RESP sent by the second gateway BGW in response to having received a communication packet COMM2 from the first gateway AGW;
- Fig. 10: shows the mapping correlation AGW-MC in the first gateway AGW and the mapping correlation BGW-MC in the second gateway BGW at the beginning of the communication process in Fig. 7;
- Figs. 11 - 13: respectively show the entries in the mapping correlations AGW-MC and BGW-MC during different stages of the communication method in Fig. 7, wherein Fig. 13 shows the contents of these mapping correlations AGW-MC and BGW-MC at a state of the communication procedure when at least one communication packet initiated by the first terminal A1 has been received by the second terminal B and the second terminal B has responded with at least one response communication packet;
- Fig. 14: shows detailed steps of the communication method in accordance with the invention, when the communication is initiated by the first terminal A1; and
- Fig. 15: shows detailed steps of the step S14.15 in Fig. 14 for decapsulating information in the response part of the communication method in Fig. 14.
- Fig. 16: shows detailed steps of another embodiment of the communication method in accordance with the invention, when the communication is initiated by the first terminal A1; and
- Fig. 17: shows detailed steps of the steps S14.6' and S14.10' in Fig. 16 for starting a receiving and transmitting procedure in the B gateway BGW.

### PROTOCOLS AND TUNNELS USED IN THE INVENTION

Hereinafter, some specific examples and embodiments of the invention will be described in a context of Internet Protocol. (IP) based networks, such as those shown in Fig. 2. However, it should be noted that the invention is not restricted to the specific use of these first (IPv4) and second (IPv6) Internet Protocols. The communication system SYS may comprise another kind of different first and second protocols. Furthermore, despite the fact that the second network PV4 and the first network IN use the same first protocol IPv4 for addressing in the respective network, it should be understood that the second and first addresses in the second PV4 and first IN networks are respectively selected from different address ranges of said first protocol IPv4. This is signified with the expression "private" in the third network GV6 implemented using the second protocol IPv6 uses third addresses which are second protocol third network addresses.

Furthermore, in the examples and embodiments below the following nomenclature is used. The first protocol is the IPv4 protocol. The second protocol is the IPv6 protocol. The first network IN is the IPv4 (global) Internet. The second network is the IPv4 private network PV4. The third network is the IPv6 network GV6. The first gateway is the gateway between the first network IN and the second network GV4. The second gateway is the gateway between the first network IN and the third network GV6. Furthermore, it should be understood that the first communication terminal A1 is capable of communication using the first protocol IPv4 and the second protocol IPv6, respectively. Both terminals, the first terminal A1 and the second terminal B, are assumed to be fixed terminals, i.e. their location remains geographically substantially the same during a network session. In particular, it means that the fixed terminals do not use location update procedures because their location remains geographically the same.

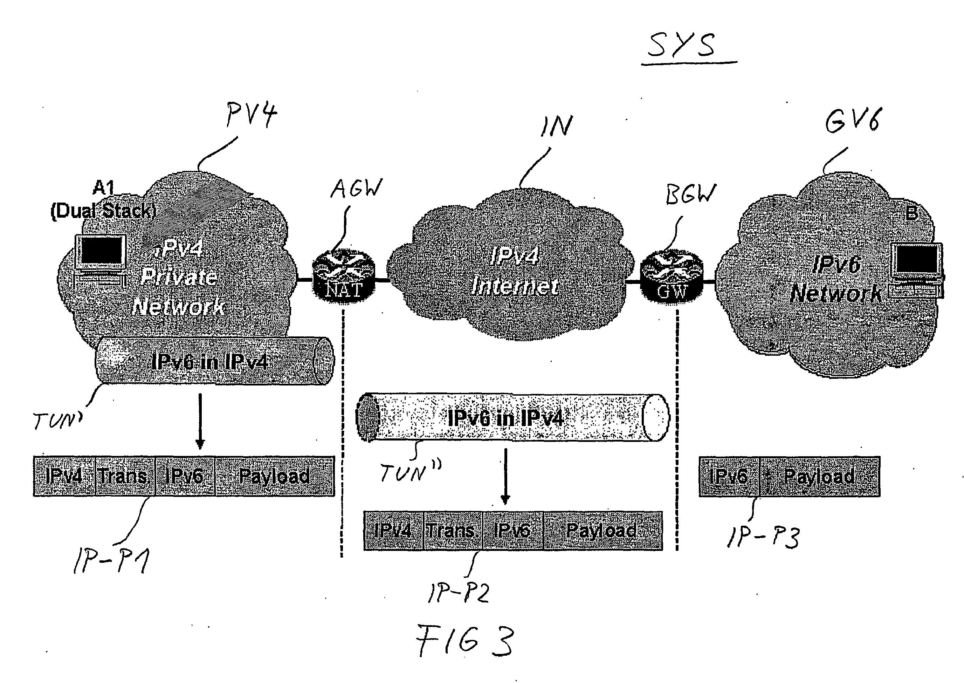

Furthermore, in Fig. 3 one of the principles of the invention is shown, namely the set-up of a tunnel TUN' between the first terminal A1 and the first gateway AGW and of a tunnel TUN" between the first gateway AGW and the second gateway BGW. As well known in the technical area to the skilled person, tunnels are set up in order to encapsulate information from one protocol into another protocol. For example, as indicated in Fig. 3, "IPv6 in IPv4" in the tunnel TUN' means that a second protocol IPv6 information (e.g. a packet) is encapsulated in the first protocol IPv4. This encapsulation is performed respectively by the transmitting unit depending on the transmission direction. For example, for a transmission from the first terminal to the first gateway the tunnel TUN' is set up by the first terminal A1. Likewise, for the communication from the first gateway AWG to the second gateway BGW, the tunnel TUN" is set up by the first gateway AGW.

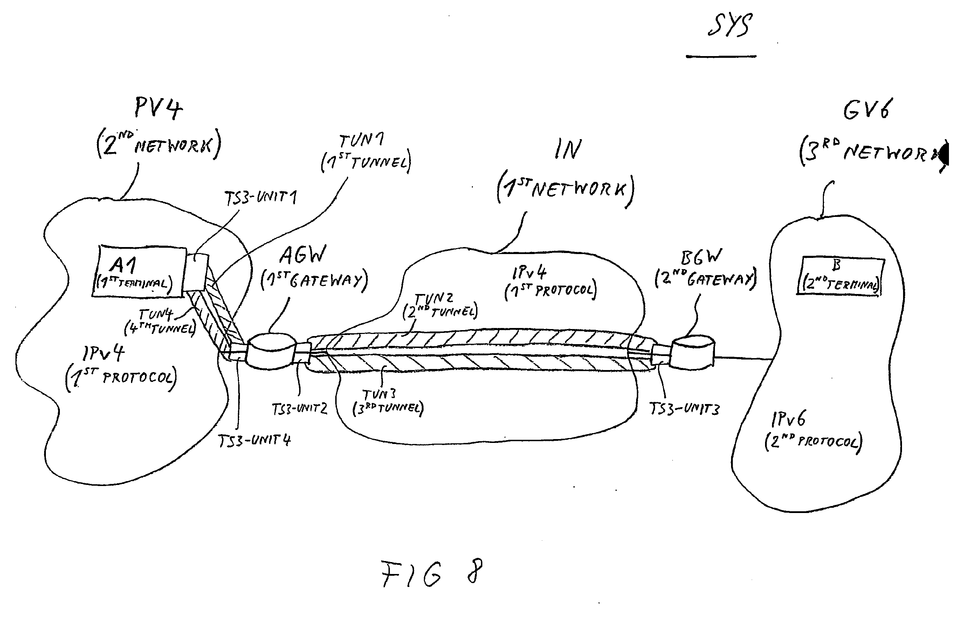

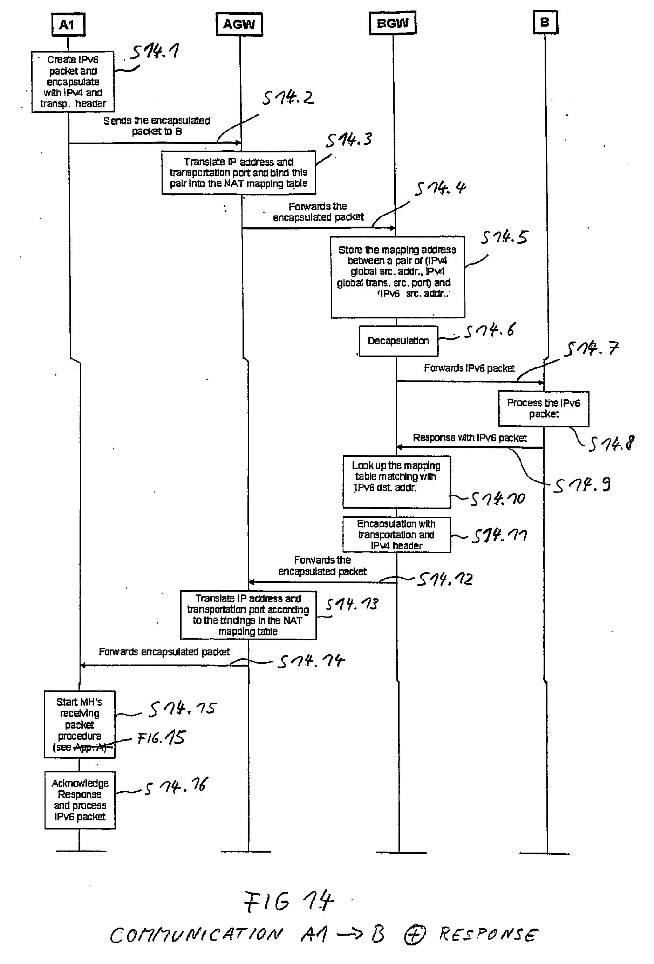

On the other hand, the receiving side performs a decapsulation of the information to retrieve the information, which has been transmitted through the tunnel. In the description of the embodiments and the examples below the numbering of the tunnels will be performed in the order in which they respectively appear in the communication between the first terminal A1 and the second terminal B (A1 → B) and in the communication of information between the second terminal B and the first terminal A1 (A1 ← B). The designation of tunnels and protocols may also be understood from the explanatory drawing in Fig. 8. During the communication a first tunnel TUN1 will be set up between the first terminal A1 and the first gateway AGW. A second tunnel TUN2 will also be set up between the first gateway AGW and the second gateway BGW. In turn, if the second terminal B responds, there is set up a third tunnel TUN3 between the second gateway BGW and the first gateway AGW and furthermore there is set up a fourth tunnel TUN4 between the first gateway AGW and the first terminal A1. For nomenclature reasons the tunnel TUN3 and TUN4 are here designated to be the third tunnel TUN3 and the fourth tunnel TUN4, although in fact - for a communication between the second terminal B and the first terminal A1, they are the first and second tunnels to be set up. This will also become clear from the description of the detailed example in Fig. 14.

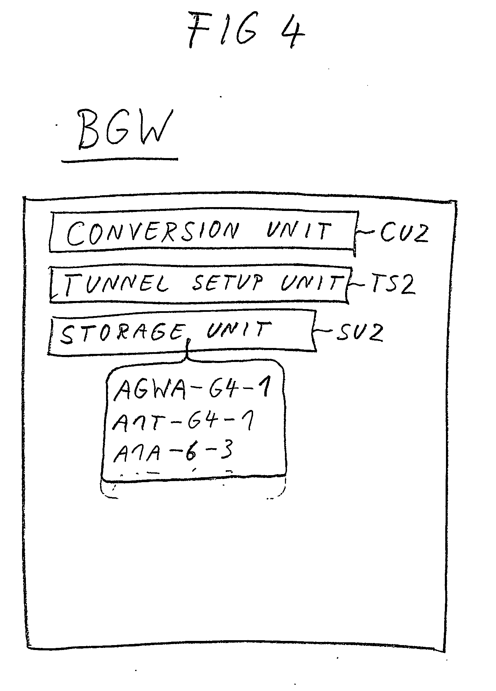

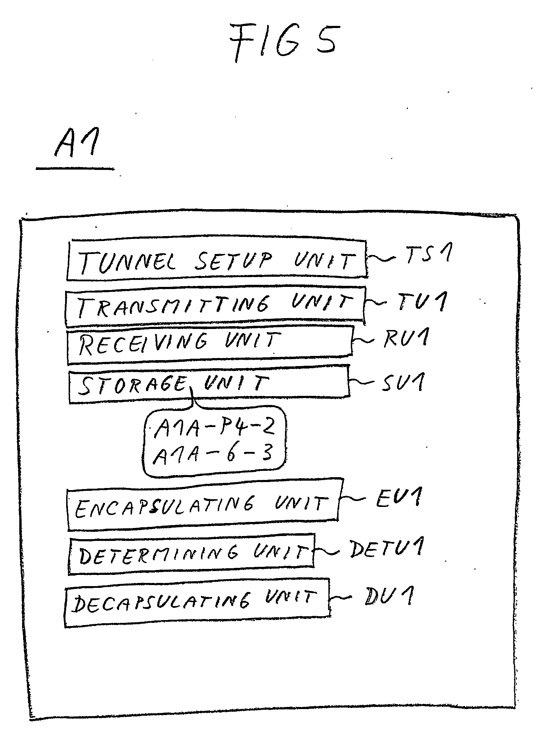

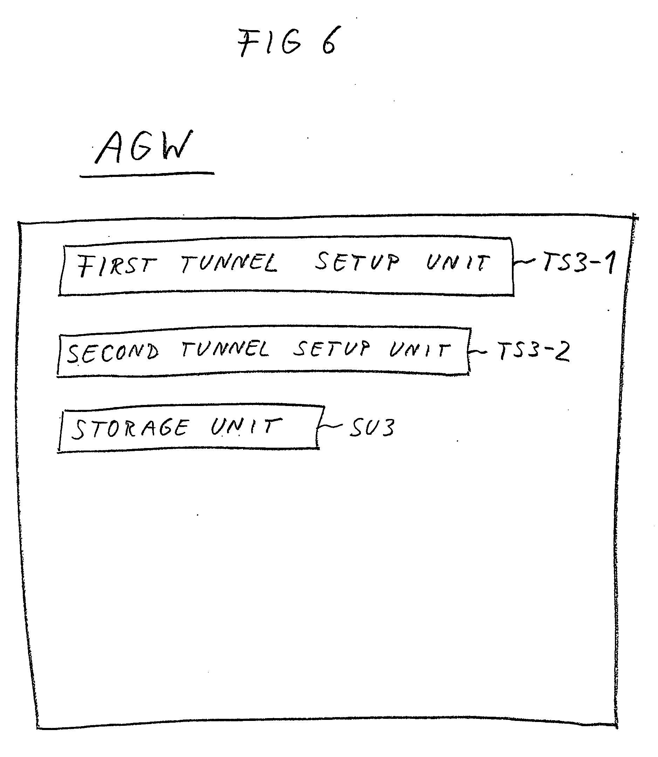

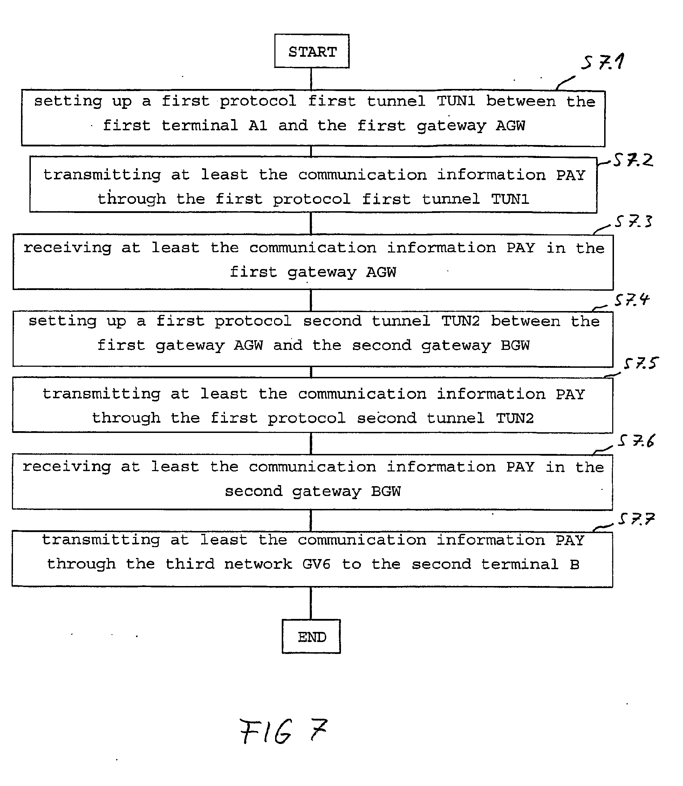

Hereinafter, the principle of the invention will be described with reference to Fig. 3 (overview of the communication system SYS, Fig. 4 (block diagram of the second gateway BGW), Fig. 5 (block diagram of the first terminal), Fig. 6 (block diagram of the first gateway AGW), Fig. 7 (flow chart of the communication method in accordance with the invention), and Fig. 8 (schematic drawing for the definition of tunnels in Fig. 3).

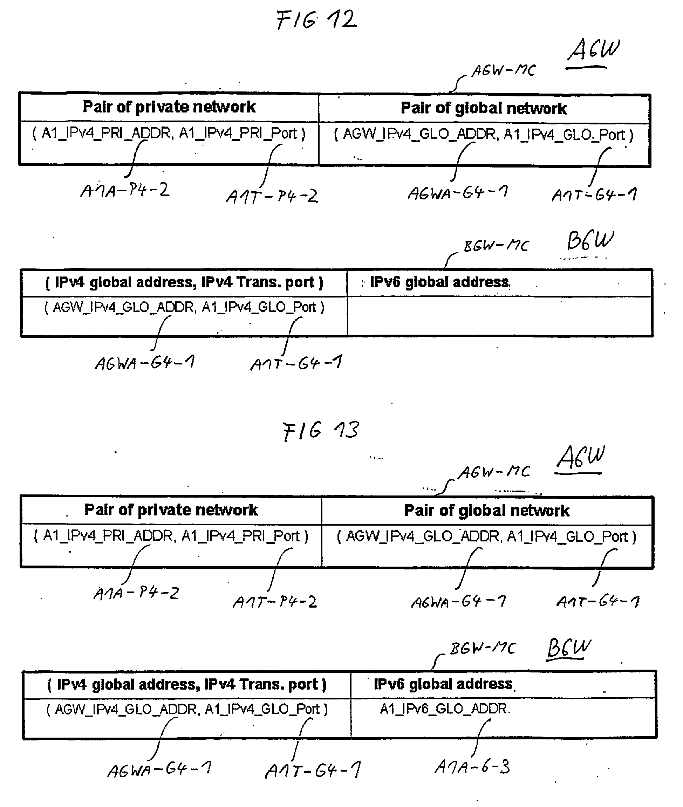

Basically, one aspect of the invention is the tunnelling of an IPv6 packet with a IPv4 transportation header as indicated with the packets IP-P1 and IP-P2 in Fig. 3. On the path from the first terminal A1 to the destination terminal B, the mapping correlation AGW-MC in the first gateway AGW, as shown in Fig. 13 (which is essentially a Network Address Translator NAT) will intercept a packet IP-P1 and will modify the encapsulation header in accordance with the mapping correlation AGW-MC. The first terminal A1 is assumed to be a fixed terminal, for example a computer, in the second network PV4 and the first terminal A1 is a dual stack (dual protocol) terminal. As will be explained below, in accordance with one example of the invention the first terminal A1 has one second protocol IPv6 address which is global, unique and routable. Whilst in Fig. 3 the communication system SYS is shown to comprise two tunnels TUN' and TUN " , these tunnels will be respectively used separately during the forward transmission (A1 → B) and the response backward transmission (A1 ← B). As also shown with the packets IP-P1 and IP-P2 in Fig. 4a, in the principle of the invention, each tunnel TUN', TUN" is a first protocol IPv4 tunnel for encapsulating second protocol IPv6 information.

### COMMUNICATION SYSTEM CONFIGURATION

As already described with reference to Fig. 2, the communication system SYS in Fig. 3 includes a first network IN implemented using a first protocol, the first network being connected to a second network PV4 implemented using said first protocol and a third network GV6 implemented using a second protocol through a respective first and second gateway, for providing communication information between the first terminal of the second network and the second network of the third network. The first and second protocols are different and the first and second networks use a first protocol for addressing in said first and second networks wherein the third network uses the second protocol for addressing in the third network. The first to third networks also comprise first to third addresses, respectively, and the first and second and second addresses being respectively first protocol first network addresses and first protocol second network addresses respectively selected from different address ranges of the first protocol. The third addresses are second protocol third network addresses. More specifically, this means that in Fig. 3 the first and second addresses of the first IN and second PV4 networks have the same format, being implemented by the first protocol IPv4, however, they have different address ranges of the complete address space available in the first protocol. The third network has third addresses, which have the second protocol format. The complete address space of the second protocol is available in the third network GV6.

In the invention the second gateway BGW, the first terminal A1 and the first gateway AGW are respectively constituted as shown in the embodiments in Fig. 4, Fig. 5 and Fig. 6, respectively, in order to carry out the communication from the first terminal A1 to the second terminal B. As already shown in Fig. 3, one of the principles of the invention is the usage of two tunnels TUN' and TUN" between the first terminal A1 and the first gateway AGW and between the first gateway AGW and the second gateway BGW, respectively. Therefore, essentially, in order to carry out the communication method in accordance with the invention, shown in Fig. 7, the main units in the block diagram embodiments in Fig. 4, Fig. 5 and Fig. 6 will be the respective tunnel set up units TS2, and TS1. Therefore, the further units shown in Fig. 4 and in Fig. 5, such as the conversion unit CU2 in Fig. 4 and the encapsulating unit EU1 constitute special embodiments in order to allow the setting up of such tunnels. Therefore, it should be understood that the block diagrams in Fig. 4, Fig. 5 and Fig. 6 respectively show all the units which are used in all embodiments of the invention, whilst only a subgroup of them will be used in order to carry out the inventive communication method as shown in Fig. 7.

### SECOND GATEWAY

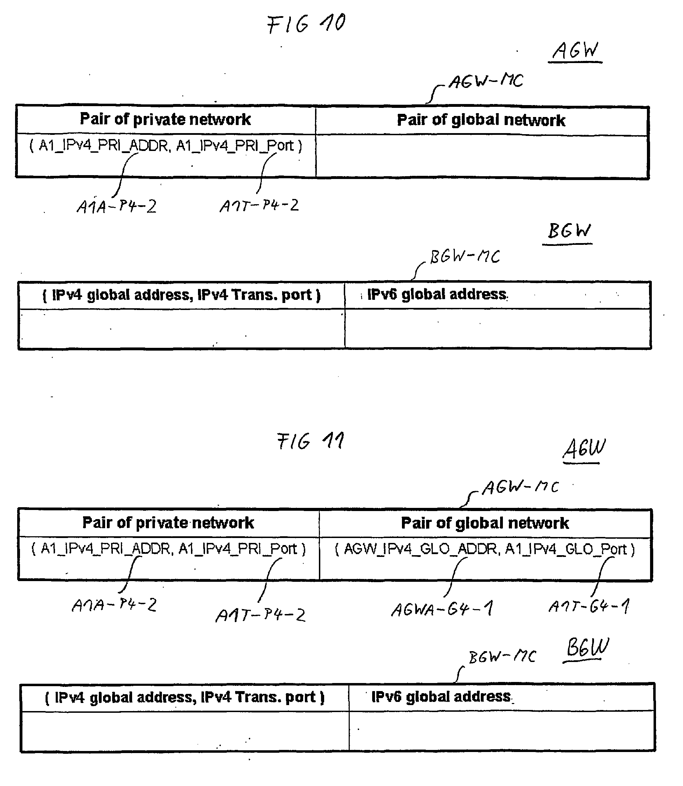

The second gateway BGW in accordance with the invention, as shown in Fig. 4, comprises a conversion unit CU2 adapted to convert between a second protocol third network first terminal address A1A-6-3 and a pair of a first protocol first network first gateway address AGWA-G4-1 and a first protocol first network transport type specific information A1T-G4-1. Such information can or example be stored as a mapping correlation BGW-MC in a storage unit SU2 of the second gateway BGW, as shown in Fig. 13. Although not shown in Fig. 13, the mapping correlation or mapping table BGW-MC in the storage unit SU2 contains an entry as shown in Fig. 13 for each first terminal station A1. For easy understanding, Fig. 11 only shows one entry for one single first terminal A1.

The entries in the mapping table or mapping correlation BGW-MC in Fig. 13 are set during the transmission of the first packets from the first terminal A1 when the communication is started by the first terminal A1, as is schematically illustrated with Fig. 10, Fig. 11, Fig. 12 and finally Fig. 13. The usage and the setting of the mapping table BGW-MC with the entries as shown in Fig. 13 is essential to carry out the communication between MH ↔ CH. Therefore, hereinafter the meaning of these entries shall be briefly explained with more details.

In the mapping correlation BGW-MC in the second gateway BGW the parameter AGWA-G4-1 constitutes the first gateway address in the first network using the first protocol. Using IPv4 in the first network IN, this parameter AGWA-G4-1 could be constituted as AGW_IPv4_GLO_ADDR, namely an IPv4 (first protocol) global address GLO_ADDR of the first gateway AGW. It is called the first protocol "first network" first gateway address because it is the global address of the first gateway as used in the "first IPv4 network". Similarly, on the right hand side in the mapping correlation BGW-MC in Fig. 13, the second protocol third network first terminal address A1A-6-3 is a second protocol Ipv6 third network first terminal address for the first terminal A1 as used in the third network GV6. Therefore, all such parameters regarding addresses in Fig. 13 have the following format:

### Referenced unit-protocol version - used in the network - address

This is also reflected in the actual reference numeral, for example A1A-6-3 for the actual value A1_IPv6_GLO_ADDR. Here, "A1" represents the "referenced unit", "A" indicates that the parameter is an "Address", "G" indicates that the address is used "Globally" and "3" indicates that this global address is used in the third network. Similarly, AGWA-G4-1 indicates "AGW" = "first gateway", "A" indicates that it is an "Address", "G4" indicates that it is a global address using the first protocol "IPv4" and "1" indicates that it is used in the first network.

As also shown in Fig. 13, the mapping correlation BGW-MC also comprises a "transport type" specific information A1T-G4-1, which includes the designation "port". Therefore, in addition to the address specification, a transport type specific information is used in the mapping correlation BGW-MC. In the communication system SYS in Fig. 3 it is necessary, in order to set up the tunnels TUN', TUN", to use an address as well as such a transport type specific information. Such a transport type specific information can be a port number when using IPv4/IPv6 type networks. That is, the addresses are necessary for routing purposes in the respective networks, i.e. an address may be a source or destination address of each transmission information (packet) to be routed through the respective network. On the other hand, for transmitting the information within each network, not only an address serving as a unique identifier is necessary, but also a transport type specific information such as "port" in Fig. 13. This "port" specifies the type of transportation, for example in the transport layer of the seven layers OSI model. For example, several applications running on the same unit (terminal) may use different port numbers for different types of transportation. Such different types of transportation can for example be a UDP (User Datagram Protocol) transportation or a TCP (Transfer Control Protocol) transportation. Other types of transportation may be a serial or parallel transportation. The usage of an address as well as a transportation type specific information on the left hand side in the mapping correlation BGW-MC is due to fact that the first network IN and the second network PV4 do not share the same address range, despite the fact that they are both implemented using the first protocol IPv4. In the present application and as is shown in Fig. 13, the transport type specific information has the following format:

### - referenced unit - protocol version - used in network - information -

For example, A1_IPv4_GLO_Port designates the "referenced unit" = "A1" using the "protocol versions" = "IPv4" and "used in network" = "globally" and "Port" designates the "transport port". Likewise, the parameter for this address is designated with "A1T-G4-1", meaning the first terminal A1 transport type specific information "T" used globally in the first protocol "G4" and in the first network "1". As mentioned above, the mapping correlation BGW-MC in the second gateway BGW comprising the information/parameters as shown in Fig. 13, is essential in order carry out the communication initiated by A1 → B, as will be described hereinafter with reference to Fig. 7.

In particular, and as will be explained below, a mapping table BGW-MC is used in order to set up the tunnel TURN" during the response communication, as explained with an example step S14.9 to step S14.16 in Fig. 14. Thus, of course the second gateway BGW in accordance with the invention comprises a tunnel set up unit TS2 for setting up a first protocol tunnel between the second gateway BGW and the first gateway AGW. Furthermore, the second gateway BGW can comprise a storage unit SU2 for storing the first protocol first network first gateway address AGWA-G4-1, the first protocol first network' transport type specific information A1T-G4-1 and the second protocol third network first terminal address A1A-6-3. Thus, a conversion unit CU2 can access the storage unit SU2 in order to perform the aforementioned described conversion. Preferably, the aforementioned addresses and the transport type specific information may be stored as said mapping table BGW-MC in the storage unit SU2. In particular, the mapping correlation BGW-MC is stored between said second protocol third network first terminal address A1A-6-3 and a pair of said first protocol first network first gateway address AGWA-G4-1 and the first protocol first network transport type specific information A1T-G4-1. Having such a mapping correlation stored in the storage unit SU2, allows the conversion unit CU2 to easily convert between the respective information. The usage of the conversion unit CU2, preferably by means of the mapping table BGW-MC, allows the usage and set up of the tunnel TUN" in Fig. 3 for respectively the tunnel TUN3 in Fig. 8 during the response communication from the second terminal B. The usage of these tunnels for the communication will be described below.

As described above, the second gateway BGW is able to store and read the address mapping BGW-MC, which identifies the gateway where A1 belongs to. The example of the mapping table is shown with the mapping correlation BGW-MC in Fig.13. This new entry will be added to the mapping table in case that this new entry is not existed yet in the mapping table.

### FIXED FIRST TERMINAL

A block diagram of the fixed first terminal A1 is shown in Fig. 5. The fixed terminal A1 is a dual-protocol terminal (dual-stack terminal), which means that it is cable of communicating using the first protocol, e.g. IPv4 and said second protocol, e.g. IPv6. In addition to a transmitting unit TU1 for transmitting information (packets) and the receiving unit RU1 for receiving information (packets), the first terminal A1 in accordance with the embodiment in Fig. 5 comprises a tunnel set up unit TS1 for setting up a first protocol tunnel, e.g. TUN1 in Fig. 8, between the first terminal A1 and the first gateway AGW. This first protocol IPv4 tunnel TUN1 is used in the communication between A1 → B.

The transmitting unit TU1 is adapted for transmitting at least a communication information PAY to said other terminal B through said first protocol tunnel TUN1 and the receiving unit RU1 is adapted for receiving a response communication information RE-PAY from the second terminal B. Furthermore, preferably the first terminal A1 comprises at least a first protocol second network first terminal address A1A-P4-2 and a second protocol third network first terminal address A1A-6-3, the usage of which will be described below with more detail. However, it should be noted that the tunnels TUN''; TUN3 can only be set up and the communication information can only be exchanged between A1 ↔ B if the storage unit SU1 in the first terminal A1 stores the IPv6 address A1A-6-3 which is global, unique and routable for the first terminal A1.

Preferably, although not shown in the block diagram in Fig. 5 for the first terminal A1, a first protocol second network transport type specific information A1T-P4-2 is provided by the first terminal A1. This first protocol second network transport type specific information A1T-P4-2 is a transportation port assigned to the first terminal A1 as a port for tunneling information through the second and first IPv4 networks (hereinafter referred to as "tunneling port"). Preferably, this tunneling port is exclusively used for the tunneling procedure of tunneling information through the second and first IPv4 networks which includes encapsulating the information at least with said first protocol second network transport type specific information A1T-P4-2. More preferably, the tunneling port is fixedly assigned to the first terminal A1 from the beginning of the communication procedure. The fixed assignment of the tunneling port is kept during the whole communication procedure with other terminals. Even when the first terminal A1 is switched off and then switched on again within the second network PV4, the assignment of the tunneling port is kept in the first terminal A1. This makes it possible that every IPv6 communication information (packet) sent from the first fixed terminal A1 is encapsulated with the same first protocol second network transport type specific information A1T-P4-2, i.e. for every IPv6 packet issued by the first terminal A1, exactly the same tunneling port "Port" is used.

Preferably, in order to set up the tunnel TUN' in.Fig. 3 or TUN1 in Fig. 8, the communication terminal A1 also comprises an encapsulating unit EU1 for encapsulating at least said communication information PAY with a transport type identifying first header at least including second protocol transport type specific information A1T-6-3, with a second protocol first header at least including a second protocol third network first terminal address A1A-6-3 and a second protocol third network second terminal address BA-6-3 with a transport type identifying second header at least including the aforementioned first protocol second network transport type specific information A1T-P4-2, and with a first protocol first header at least including a first protocol second network first terminal address A1A-P4-2 and a first protocol first network second gateway address BGWA-G4-1. Since "encapsulation" is a part of the setting up of the first tunnel TUN1 (in Fig. 8) or TUN' (in Fig. 3), the encapsulating unit EU1 may also be viewed to be part of the tunnel set-up unit TS1 of the first terminal A1.

Preferably, the communication terminal A1 also comprise a determining unit DETU1 for determining whether a received packet comprises a transport type identifying header including the first protocol second network transport type specific information A1T-P4-2.

The communication terminal A1 also comprises a decapsulating unit DU1 for decapsulating the response communication information RE-PAY at least from said transport type identifying header including said first protocol second network transport type specific information A1T-P4-2. Preferably, the encapsulating unit DU1 only encapsulates said response communication information RE-PAY, when said determining unit DETU1 has determined that said received packet comprises said transport type identifying header including said first protocol second network transport type specific information A1T-P4-2.

The special information which will be encapsulated with a header by the encapsulating unit EU1 will hereinafter be described with reference to the communication method A1 → B in Fig. 7.

It should be noted that one of the novel features of the communication terminal A1 for allowing the communication A1 → B is the fact that the terminal A1 is capable of communicating using the first protocol IPv4 as well as the second protocol IPv6 and that the communication terminal A1 can set up the first protocol tunnel TUN1 by the tunnel set-up unit TS1. The setting up of the tunnel TUN1 is enabled using the information stored in the storage unit SU1, preferably, as shown in Fig. 1 by using the parameters A1A-P4-2 and A1A-6-3. In particular, the fist terminal A1 must have one IPv6 address, which is global, unique and routable, namely the parameter A1A-6-3.

Before coming to a detailed description of the communication method in accordance with Fig. 7, it should be understood that by contrast to a conventional first terminal A1 and to a conventional gateway, such as the first gateway AGW, in accordance with the invention the first terminal A1 and the second gateway BGW and the communication system SYS of Fig. 3 are constituted as shown in Fig. 4 and Fig. 5 and as explained above.

Since in the communication procedure A1 →B also the conventionally provided NAT (mapping correlation AGW-MC in Fig. 13) will be used in the first network AGW, for completion purposes, a block diagram of the first gateway AGW is shown in Fig. 6.

### FIRST GATEWAY

In particular, the first gateway AGW between the second and first networks PV4, IN comprises a second tunnel set-up unit TS3-2 for setting up a first protocol second tunnel TUN2 (in Fig. 8) or TUN" (in Fig. 3) between the first gateway AGW and the second gateway BGW. The first gateway AGW comprises also a second tunnel set-up unit TS3-2 for setting up a first protocol fourth tunnel TUN4 between said first gateway AGW and said first terminal A1, as shown with the tunnel TUN' in Fig. 3. Preferably, for allowing the tunnel set-up units TS3-1; TS3-2 to set up the respective tunnels, the first gateway AGW comprises a storage unit SU3 for storing a first protocol second network first terminal address A1A-G4-2, a first protocol second network transport type specific information A1T-P4-2, a first protocol first network first gateway address AGWA-G4-1, and a first protocol first network transport type specific information A1T-G4-1, as shown with the mapping table AGW-MC in the first gateway AGW in Fig. 13.

As shown in Fig. 10 illustrating the contents of the AGW and BGW mapping correlations AGW-MC, BGW-MC before the start of a communication initiated by the first terminal A1, the parameters on the right hand side, i.e. AGWA-G4-1 and A1-T-G4-1 have not been set as yet. These information will be set during the first forward transmission of a packet from the first terminal A1 to the second terminal B and will be used in the backward (return direction) transmission of a packet from the second terminal B to the first terminal A1 in response to the forward transmission. Despite the fact that the table AGW-MC in Fig. 10 and BGW-MC in Fig. 10 will only be set during the first forward packet transmission from A1 to B, it should be noted that the information stored in the mapping correlation AGW-MC, as shown in Fig. 13, is usually stored, in accordance with the prior art in the so-called Network Address Translator NAT in a gateway such as the first gateway AGW. Although this information is available.in a conventional NAT, this information is used in the communication method in accordance with the invention to be described below with reference to Fig. 7.

### COMMUNICATION METHOD IN ACCORDANCE WITH THE INVENTION

Fig.7 shows an embodiment of the communication method in accordance with the invention. As may be understood from Fig. 7, when the communication is initiated by the first terminal A1, there will be set up two tunnels TUN' and TUN" through the second network PV4 and the first network IN and during the set up of these tunnels also the entries in the mapping tables AGW-MC and BGW-MC are made as stepwise shown with Figs. 10, 11 and 12. However, the setting of these tables is a specific detail of the invention and tunnels may be set up by other means, depending on the protocol implementation. The central idea of the inventive communication method is, however, shown in Fig. 3 and will hereinafter be described with reference to Fig. 7.
In step S7.1 in Fig. 7, the tunnel set-up unit TS1 of the first terminal A1 will set up a first protocol first tunnel TUN1 between the first terminal A1 and the first gateway AGW. Essentially, as shown in Fig. 3, the setting up of the first protocol first tunnel TUN' means that the IPv6 protocol type packet "IPv6 - PAYLOAD" is encapsulated with an appropriate IPv4 address "IPv4" and a transport type specific information "Trans". Thus, in step S7.2 the communication information PAY is transmitted through the first protocol first tunnel TUN1 by virtue of it being encapsulated with an IPv4 header. Thus, in steps S7.1, S7.2 the IPv6 packet created by the first terminal A1 is encapsulated with an IPv4 header and transportation header. An example of the transportation header is either a UDP or a TCP header. Both of the IPv4 header and the transportation header will be used for NAT mapping table purposes (the NAT table AGW-MC is stored in the first gateway AGW).

In step S7.3 the communication information PAY is received in the first gateway AGW. Using the mapping correlation AGW-MC in the first gateway AGW - which is essentially used for exchanging the header in the packet IP-P1 received from the first terminal A1, the first gateway AGW enables to setting up of a first protocol second tunnel TUN2 between the first gateway AGW and the second gateway BGW in step S7.4. Subsequently, in step S7.5, at least the communication information PAY is transmitted through the first protocol second tunnel TUN2 and is received in step S7.6 in the second gateway BGW. The encapsulating unit of the second gateway BGW encapsulates the communication information PAY and transmits the communication information PAY through the third network GV6 to the second terminal B whereafter the communication from A1 to B is completed.

Although not shown in Fig. 7, a response/acknowledgement procedure may be carried out by the second terminal B returning a response packet to the first terminal A1 in a response/acknowledgement procedure. The detained steps of the acknowledgement/response procedure is shown with step S14.9 to step S14.16 in Fig. 14. However, the central idea of the invention is the setting up of the two tunnels TUN' and TUN" through the second network PV4 and the first network IN instead of other solutions such as using a virtual private network VPN. This setting up of tunnels is enabled by using the new mapping table in the second gateway BGW as explained above. With the provision of a mapping table in the second gateway BGW and with the provision of receiving procedure of the dual-stack first terminal A1, also a return or response communication from the second terminal B to the first terminal A1 is possible. This will be described below with concrete details referring to the entries in the mapping table BGW-MC in the second terminal BGW.

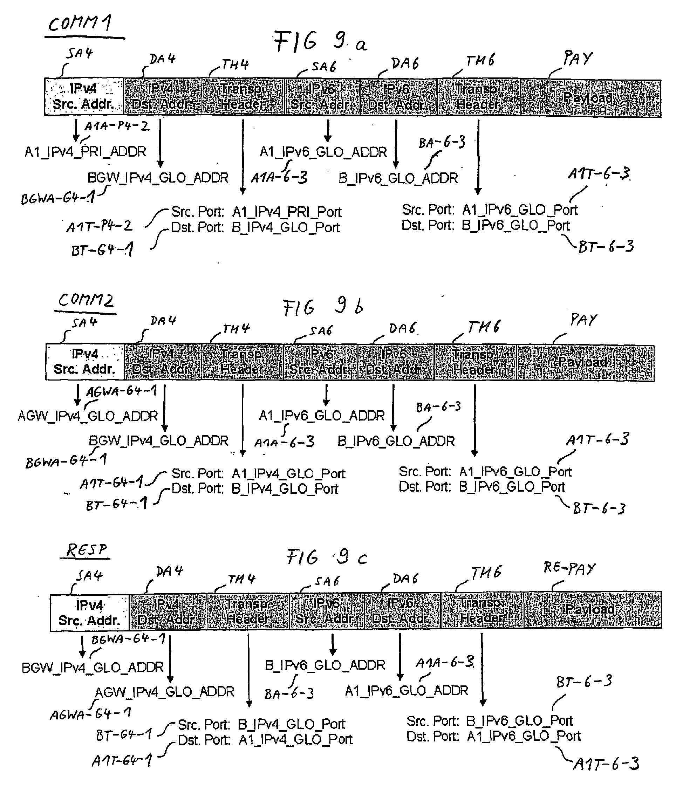

Having described generally the usage of the first and second tunnels TUN' and TUN" during a communication initiated by the first terminal A1, hereinafter, with reference to Fig. 9a, 9b, 9c and with reference to the detailed steps in Fig. 14, a detailed setting of the individual entries in the mapping table AGW-MC and BGW-MC will be explained.

### DETAILED EMBODIMENT OF THE COMMUNICATION METHOD

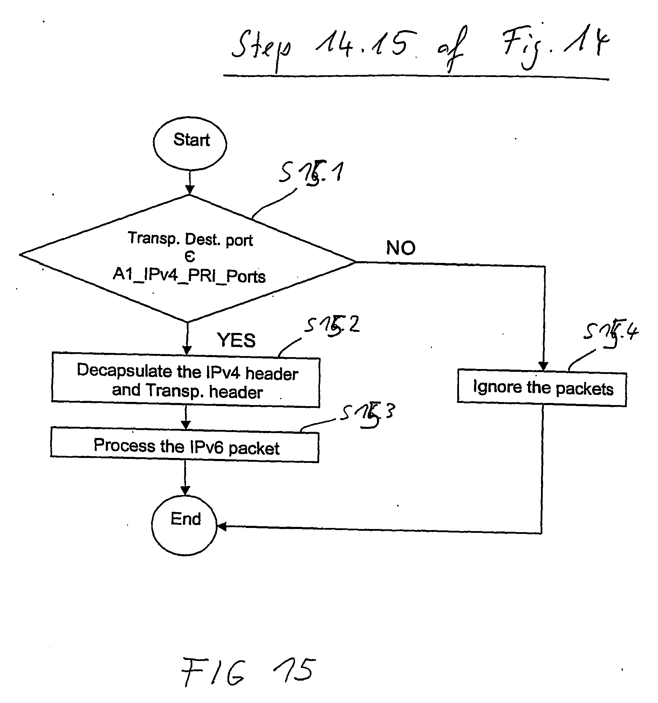

Fig. 10 shows the entries of the mapping table AGW-MC in the first gateway AGW (essentially the MAT table) and the mapping table BGW-MC in the second gateway BGW before the start of the communication method in Fig. 14. Fig. 11, Fig. 12 and Fig. 13 show the entries made in the mapping tables AGW-MC, BGW-MC during various stages of the communication method in Fig.. 14. In Fig. 14 itself, steps S14.1 to S14.8 relate to the forward (A1 → B) communication using the first and second tunnels TUN1, TUN2 as shown in Fig. 8, and steps S14.9 to S14.16 relate to the backward response (A1 ← B) communication using the tunnels TUN3, TUN4 as shown in Fig. 8. Fig. 15 shows more detailed steps of step S14.15 in Fig. 14.

The structure of the packets transmitted through the various tunnels is shown in Fig. 3 and Figs. 9a, Fig. 9b and Fig. 9c respectively show a more detailed construction of the communication packets COMM1 through the first tunnel TUN1, of the communication packet COMM2 through the second tunnel TUN2 and of the response packet RESP transmitted through the third and fourth tunnels TUN3, TUN4.

In step S14.1 the first terminal A1 - initiating the communication to the second terminal B - creates an IPv6 packet consisting of the parameter fields SA6, DA6, TH6 und PAY as shown in Fig. 9a. This IPv6 packet is also indicated with "IPv6| payload" in the packet IP-P1 in Fig. 3. In particular, the IPv6 packet comprises a source address formed by the parameter A1A-6-3 in the parameter field SA6. Essentially, the parameter A1A-6-3 is stored (see Fig. 5) in the storage unit SU1 of the first terminal A1 as a global and unique and routable IPv6 address of the first terminal A1. Of course, the IPv6 packet also has a destination address BA-6-3 in the destination field DA6. Thus, the source and destination field SA6, DA6 indicate the global second protocol IPv6 source and destination address for the IPv6 packet generated by the first terminal A1. The IPv6 packet also comprises a transportation header TH6 consisting of a source and destination port parameter A1T-6-3 and BT-6-3. The source and destination port parameters are global port parameters in the second protocol IPv6, as indicated in Fig. 9a. In the payload field PAY, the actual payload data is contained.

Furthermore, in step S14.1 the IPv6 packet (fields SA6, DA6, TH6, PAY) is encapsulated with IPv4 source and destination headers SA4, DA4 and an IPv4 transportation header TH4, as also shown in Fig. 9a. SA4, DA4 and TH4 in the packet COMM1 in Fig. 9a correspond to the sections "IPv4 | trans." in the packet IP-P1 in Fig. 3. Since the IPv6 packet "SA6, DA6, TH6, PAY" needs to be routed through the "private" IPv4 second network PV4, the source and destination address in the IPv4 source and destination fields SA4, DA4 comprise a "private" source address, A1A-P4-2 of the first terminal A1 (A1 belongs to the "private" network PV4) and a global destination address BGWA-G4-1 of the second gateway BGW. Likewise, the transportation header TH4 can comprise a source and destination port A1T-P4-2 and BT-G4-1 respectively having a private IPv4 designation and a global IPv4 designation.

Essentially, the encapsulation of the IPv6 packet (SA6, DA6, TH6, PAY) with the IPv4 header (SA4, DA4, TH4) sets up the tunnel TUN' in Fig. 3 or TUN1 in Fig. 8. Therefore, the tunnel set-up unit TS1 of the first terminal A1 shown in Fig. 5 may be viewed as comprising the encapsulating unit EU1 for encapsulating of at least said communication information with a transport type identifying first header at least including second protocol transport type specific information, with a second-protocol first header at least including a second protocol third network first terminal address and a second protocol third network second terminal address, with a transport type identifying second header at least including first protocol second network transport type specific information, and with a first-protocol first header at least including a first protocol second network first terminal address and a first protocol first network second gateway address. Preferably, the transportation type headers may be UDP (User Datagram Protocol) or TCP (Transfer Control Protocol) headers.

In step S14.2 (essentially corresponding to step S7.2 in Fig. 7) the encapsulated packet COMM1 shown in Fig. 9a is transmitted to the first gateway AGW because the IPv4 source address in the source field SA4 is the A1 private address and the IPv4 destination address in the destination field DA4 is the global address of the second gateway BGW. Despite the fact that the destination field DA4 comprises as IPv4 destination address a global IPv4 address of the second gateway BGW (and not of the first gateway AGW), the packet COMM1 is routed to the first gateway AGW because this is the only gateway which allows the eventual routing of the packet COMM1 to the second gateway BGW. When the packet is received after step S14.2 (at the stage of step S7.3 in Fig. 7) in the first gateway AGW, the first gateway AGW needs to convert the private-type address and port A1A-P4-2 and A1T-P4-2 of the source field SA4 and the transportation header TH4 into a global IPv4 address and port since the next tunnel TUN" (in Fig. 3) and TUN2 (in Fig. 8) has to be set up through the "global" IPv4 first network IN. Therefore, in step S14.3 the IP address and transportation port are translated by using the pair stored in the NAT mapping table AGW-MC as shown in Fig. 11. Essentially, the entries in the mapping table AGW-MC in Fig. 11 are used in order to replace in the communication packet COMM1 the private address A1A-P4-2 in the source field SA4 by the new source address AGWA-G4-1 in the source field SA4 and to replace the private port A1T-P4-2 in the transportation header TH4 by a new global port A1T-G4-1 in a transportation header TH4. Thus, essentially using the conversion or mapping table AGW-MC, the communication packet COMM1 of Fig. 9a receives new entries in the source field SA4 and the transportation header TH4 to result in the communication packet COMM2 in Fig. 9b. At the same time, the replacement of address and port in accordance with the mapping table AGW-MC (the network address translator) may be viewed as the "new encapsulation", i.e. the new set up of a tunnel TUN" in Fig. 3 (and TUN2 in Fig. 8). Thus, the packet IP-P2 shown in Fig. 3 essentially corresponds to the communication packet COMM2, however, with a revised IPv4 header "IPv4|trans." Thus, the conversion or encapsulation may be seen as the function of setting up the tunnel by the first tunnel set-up unit TS3-1 shown in Fig. 6 in the block diagram of the first gateway AGW.

In step S14.4 the communication packet COMM2 shown in Fig. 9b is transmitted to the second gateway BGW. Thus, steps S14.3 and S14.4. may be considered to correspond to steps S7.4 and S7.5 in Fig. 7.

In step S14.5 the communication packet COMM2 is received in the second gateway BGW (corresponding to step S7.6 in Fig. 7). The entry in the mapping table BGW-MC before receiving the encapsulated IPv4 packet in step S14.4 is shown in Fig. 11 and Fig. 12 shows the entries after step S14.5.

Of course, after receiving the communication packet COMM2 of Fig. 9b in the second gateway BGW in step S14.5, the desire is to forward the communication information PAY finally to the destination terminal B through the second protocol IPv6 third network GV6. Since the third network GV6 is a second protocol IPv6 network, no tunnel needs to be set up and simply the IPv4 header consisting of the source and destination field SA4, DA4 and the transport header TH4 is stripped off from the communication packet COMM2 to result in a pure IPv6 packet which can then be routed to the global destination address BA-6-3 of the second terminal B which is stored in the IPv6 destination field DA6 of the IPv6 packet (SA6, DA6, TH6, PAY). This stripping off or decapsulation is performed in step S14.6 before the packet is forwarded in step S14.7 to the second terminal B.

Furthermore, in step S14.5 the mapping table BGW-MC is set with the entries as shown in Fig. 13. That is, in the mapping table BGW-MC a correspondence relationship between the IPv4 global address of the first gateway AGWA-G4-1 and the IPv4 global port of the first terminal A1, namely the parameter A1T-G4-1 and the global IPv6 address of the first terminal A1, namely the parameter A1A-6-3 is stored. The second gateway BGW can set the parameter A1A-6-3 in the right-hand side of the table and the corresponding parameters AGWA-G4-1 and A1T-4-1 because these parameters are stored in the received communication packet COMM2 in the source address field SA4, the transportation header TH4 and the source address SA6. The setting of the correspondence or mapping relationship BGW-MC in the second gateway BGW is essential for the invention because in the response communication A1 ← B, not only the NAT table AGW-MC but also the second gateway table BGW-MC need to be used, as will be understood from the response communications steps S14.9 to S14.16 shown in Fig. 14.

To complete the forward transmission (A1 → B) communication, in S14.8 the communication information PAY extracted from the received IPv6 packet is processed by the second terminal B. It should also be noted that steps S14.5, S14.6, S14.7 and S14.8 correspond to the steps S7.6 and S7.7 in Fig. 7.

### RESPONSE COMMUNICATION A1 ← B

Having stored the mapping correlation BGW-MC between the second protocol third network first terminal address A1A-6-3 and the pair of said first protocol first network first gateway address AGWA-4-1 and said first protocol first network transport type specific information A1T-G4-1 in S14.5, the response communication is possible in accordance with steps S14.9 to S14.16 as shown in Fig. 14.

In step S14.9, the second terminal B creates an IPv6 packet which essentially has the format as the packet IP-P3 shown in Fig. 3. It may also be noted that the format of the packet IP-P3 shown in Fig. 3 is used in step S14.7 when the communication packet COMM2 having its IPv4 headers (SA4, DA4, TH4) stripped off, is transmitted to the second terminal B. That is, in step S14.9 essentially a response packet in the format of the packet IP-P3 in Fig. 3 and comprising the IPv6 parameter fields SA6 (source address), DA6 (destination address), TH6 (transportation header source and destination port) and RE-PAY (response communication payload information) of the response packet RESP in Fig. 9c is transmitted to the second gateway BGW. Of course, this IPv6 packet has as source address in the source field SA6 the global IPv6 address of the second terminal B, namely the parameter BA-6-3. Its destination address in the destination field DA6 is the global IPv6 address of the first terminal, namely the parameter A1A-6-3. That is, since the second terminal B its entirely a second protocol IPv6 fixed terminal, it has no other choice but specifying IPv6 global source and destination addresses in the source and destination field SA6 and DA6. Of course, for the second terminal B the desire is that the IPv6 packet is eventually transmitted to the first terminal A1 and therefore a global and unique IPv6 address of the first terminal A1 must also be known to the second terminal B. The second terminal B can know this global IPv6 address from the received IPv6 communication packet because the source address field SA6 of the received IPv6 packet (SA6, DA6, TH6, PAY) contains this global IPv6 address, namely A1A-6-3. This is also the reason why initially the first terminal A1 must have a unique global IPv6 address assigned (which is stored in the storage unit SU1, as shown in the block diagram of the first terminal A1 in Fig. 5).

In step S14.10 in Fig. 14 the second gateway receives the IPv6 packet (SA6, DA6, TH6, RE-PAY in Fig. 9c) generated by the second terminal. The second gateway BGW then looks up the mapping table BGW-MC, shown in Fig. 13, with the IPv6 destination address stored in the IPv6 destination field DA6. From the mapping table BGW-MC it obtains the IPv4 global address of the first gateway AGW, namely the parameter AGWA-G4-1 as well as the IPv4 global port of the first terminal A1, namely the parameter A1T-G4-1 and it uses these parameters AGWA-G4-1 and A1T-G4-1 in an IPv4 header consisting of the parameter fields SA4, DA4, TH4, as shown in Fig. 9c. In particular, AGWA-G4-1 is inserted as the IPv4 destination address in the destination field DA4 and the parameter A1T-G4-1 is used as the global destination port in the transport header TH4. When encapsulating the IPv6 packet (SA6, DA6, TH6, RE-PAY) with the IPv4 header (SA4, DA4, TH4), essentially a tunnel like the third tunnel TUN3 in Fig. 8 is set up by the second gateway BGW in step S14.6. All the other parameters necessary, i.e. the IPv4 source address in the source field SA4, the source port BT-G4-1 in the transport header TH4 and also the other parameters BA-6-3 in the source field SA6 and the source and destination ports BT-6-3 and A1T-6-3 in the transportation header TH6 can be derived by the second terminal B and the second gateway BGW, respectively, on the basis of the information received in the packet COMM2 shown in Fig. 9b.

Therefore, on the backward communication through the third tunnel TUN3 the.response packet RESP has the format of an IPv4 encapsulated IPv6 packet as shown in Fig. 9c (and as is shown with IP-P2 in Fig. 3). Thus, one can say that the tunnel set-up unit TS2 of the second gateway BGW sets up the tunnel TUN3 by adding the IPv4 header to the IPv6 packet. This is done in step S14.11 in Fig. 14.

In step S14.12 the encapsulated response packet RESP as shown in Fig. 9c is forwarded to the first gateway AGW. In step S14.13 the first gateway AGW will set up another tunnel to the first terminal A1. This tunnel is designated with TUN' in Fig. 3 and is the tunnel TUN4 shown in Fig. 8. It also is an "IPv6 in IPv4 tunnel" as indicated in Fig. 3, however, through the IPv4 private network PV4. Therefore, the encapsulation is done in the same manner as for the tunnel TUN" through the IPv4 Internet Network IN, namely an IPv4 header is added to the IPv6 packet. However, the IPv4 header will be different because in step S14.13 the first gateway AGW accesses the mapping table AGW-MC with the destination address AGWA-G4-1 (stored in the destination field DA4) and with the destination port A1T-G4-1 stored in the transportation header TH4. In this manner, the global address and global port numbers are converted to the private address and private port parameters A1A-PV-2 and A1T-P4-2, as shown in Fig. 13. That is, rather than adding yet another IPv4 header to the response packet RESP, the first gateway AGW simply replaces AGWA-G4-1 by A1A-P4-2 and A1T-G4-1 by A1T-P4-2 in the IPv4 destination address field DA4 and in the IPv4 transportation header TH4, respectively. Thus, the original IPv6 packet (SA6, DA6, TH6, RE-PAY) is differently encapsulated which leads to the tunneling of the response packet RESP with the replaced DA4 and TH4 fields through the tunnel TUN4 as shown in Fig. 8. In step S14.14, therefore, this packet with the new IPv4 header is forwarded through the fourth tunnel TUN4 (TUN' in Fig. 3) to the first terminal A1. In step S14.15 the first terminal A1 receives the response packet RESP with its replaced parameter fields and performs the packet receiving procedure as shown with more details in Fig. 15. In particular, when receiving the response packet RESP (with.the replaced DA4 and TH4 parameters), in step S15.1 the first terminal A1 checks whether the transportation destination port in the transportation header TH4 is identical to the original source port A1T-P4-2 which the first terminal A1 had inserted into the original communication packet COMM1 in the transportation header TH4 (Fig. 9a). If the first gateway, in step S15.1, does not detect that the received response packet has the correct port designation of A1T-P4-2 (namely A1_IPv4_PRI_PORT), then in step S15.4 the received response packet is ignored.

If YES in step S15.1, the first terminal A1 will then, in step S15.2, decapsulate the IPv4 header and the IPv4 transportation header from the received response packet. That is, from the packet format IP-P1 shown in Fig. 3 the IPv4 relevant address and transportation header "IPv4/Trans." is removed. Then the actual IPv6 packet is processed in order to obtain the RE-PAY payload information from the packet.

Preferably, in step S14.16, an acknowledgement response is sent to the second terminal B and the IPv6 packet is processed. Since all the tables AGW-MC and BGW-MC in the first and second gateways AGW, BGW have been set during the first (forward) transmission of a communication packet from the first terminal A1 to the second terminal B, there can now be transmitted further packets from the first terminal A1 to the second terminal B and from the second terminal B to the first terminal A1. Such packets may be communication packets or acknowledgement packets, depending on the actual payload information contained in the packets.

As may be understood from the above detailed description of Fig. 14 (in connection with Fig. 9a, 9b, 9c, Fig. 10, Fig. 11, Fig. 12, Fig. 13 and Fig. 15), in order to allow the communication from the first terminal A1 to the second terminal B in Fig. 3, the only prerequisite is that the first terminal is a dual-stack terminal and that it has assigned to it the global unique and routable IPv6 address A1A-6-3 (namely A1_IPv6 GLO_ADDR) which is forwarded as the first IPv6 source address in the source field SA6 in the first communication packet COMM1. It is this global IPv6 address of the first terminal A1, which is then used in the mapping correlation BGW-MC in the second gateway BGW in order to allow the backward propagation of packets (response packets) from the second terminal B to the first terminal A1 in response to receiving the first communication packets COMM2 from the first terminal A1.

Furthermore, another prerequisite is that during one session initiated from A1 to B the private IPv4 port A1T-P4-2 (see the mapping correlation BGW-MC in Fig. 13) is fixedly assigned to the first terminal A1. This makes it possible that every IPv6 communication information (packet) is encapsulated with the same transport type specific information, i.e. for every IPv6 packet the same tunneling port is used. This port must be same for the forward and backward communication and this is also checked with step S15.1 in Fig. 15.

### FURTHER EMBODIMENTS

As already explained above for the embodiment of the communication A1 → B/response procedure with respect to Fig. 14, the second gateway BGW in step S14.5 stores a mapping correlation BGW-MC between the second protocol third network first terminal address A1A-6-3 and a pair of parameters AGWA-G4-1 and A1T-G4-1. Then, in step S14.6, the decapsulating unit of the second gateway BGW strips off the IPv4 portions SA4, DA4, TH4 from the communication packet COMM2.

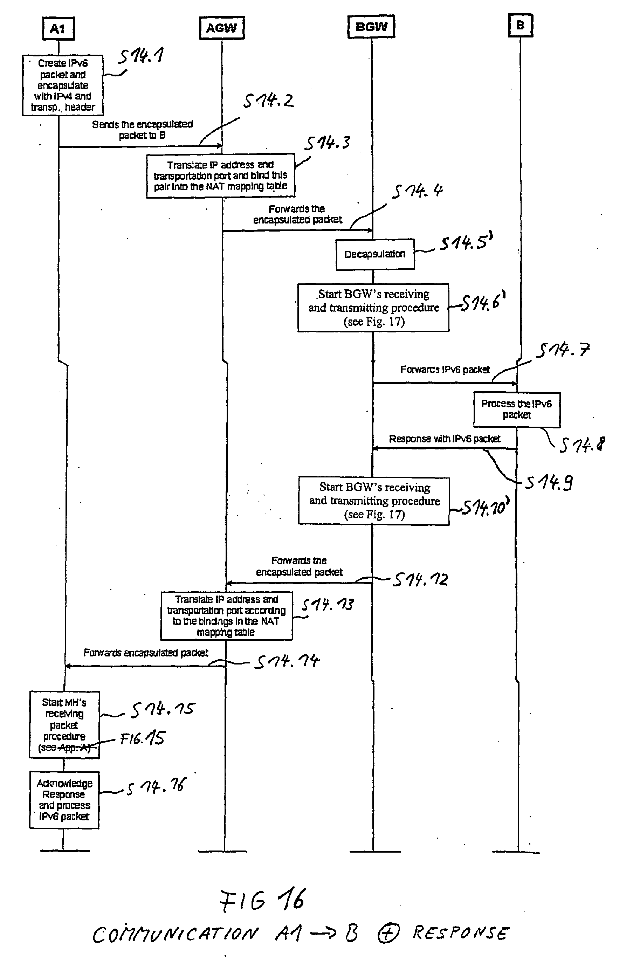

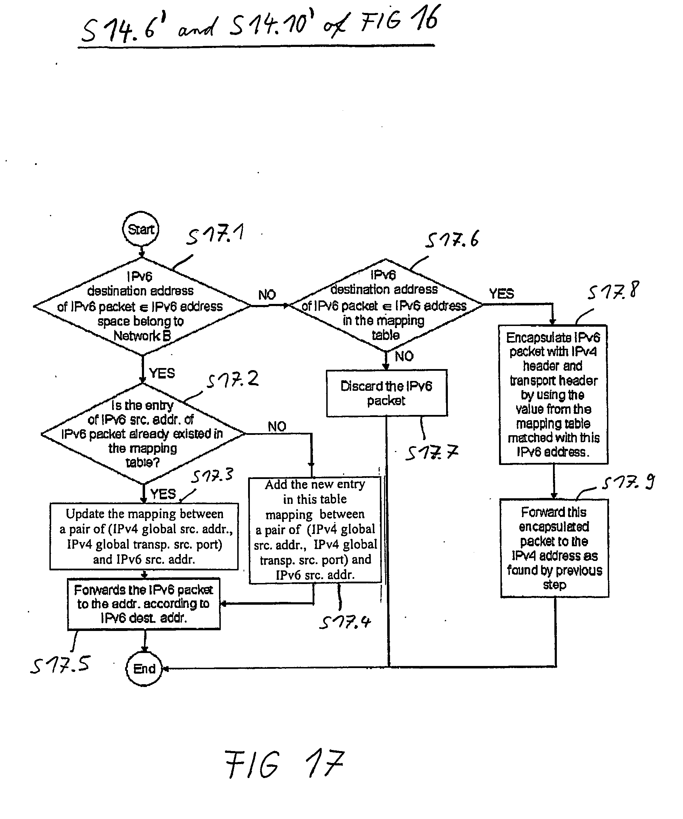

However, according to another embodiment, the communication A1 → B/response procedure can also be done as shown in Fig. 16. The steps S14.1 to S14.4 of Fig. 16 are identical to steps S14.1 to S14.4 of Fig. 14. Therefore, the same reference numerals are assigned to these steps in Fig. 16 and the description of these steps will not be repeated here. Step S14.5' of Fig. 16 shows that the encapsulated packet forwarded from the first gateway AGW to the second gateway BGW in step S14.4 is decapsulated. This means that in step S14.5' the decapsulting unit of the second gateway BGW strips off the IPv4 portions SA4, DA4, TH4 from the communication packet COMM2. Then, in step S14.6', the second gateway BGW starts its receiving and transmitting procedure as shown in Fig. 17. The BGW's receiving and transmitting procedure according to Fig. 17 in general will be described in the following.

In step S17.1, it is checked whether the IPv6 destination address of the received IPv6 packet is an IPv6 address belonging to the IPv6 address space of the B network. If yes ("YES" in step S17.1), it is checked in step S17.2 whether the entry of the IPv6 source address of the IPv6 packet already exists in the mapping table BGW-MC. This means that it is checked whether there is an entry A1A-6-3 (second protocol third network first terminal address A1_IPv6_GLO_ADDR) of a certain terminal A1 belonging to another network A. If no ("NO" in step S17.2), a new entry is added in the second gateway mapping correlation BGW-MC mapping between a pair of (IPv4 global source address, IPv4 global transport source port) and the IPv6 source address. This means that in step S17.4 a new mapping correlation is stored in the mapping table BGW-MC between the second protocol third network first terminal address A1A-6-3 and a pair of the first protocol first network first gateway address AGWA-G4-1 and the first protocol first network transport type specific information A1T-G4-1. If the result of step S17.2 is that there already exists an entry of the IPv6 source address of the received IPv6 packet in the mapping table BGW-MC ("YES" in step S17.2), then in step S17.3 the mapping between a pair of (IPv4 global source address, IPv4 global transport source port) and the IPv6 source address is updated. This means that the values of the parameters A1A-6-3, AGWA-G4-1 and A1T-G4-1 are updated. Also, if there was a change in at least one of these three parameters during the updating, the mapping correlation between the second protocol third network first terminal address A1A-6-3 and the pair of the first protocol first network first gateway address AGWA-G4-1 and the first protocol first network transport type specific information A1T-G4-1 is updated. After step S17.3 and also after step S17.4, the IPv6 packet is forwarded to the address according to the IPv6 destination address in step S17.5. However, there is in principal also the possibility that the encapsulated packet forwarded to BGW and decapsulated from the IPv4 address header and the IPv4 transport header for example in step S14.5' has an IPv6 destination address which does not belong to the IPv6 address space of the B network ("NO" in step S17.1). In this case, in the following step S17.6 it is checked whether the IPv6 destination address of the IPv6 packet is an IPv6 address stored in the mapping table BGW-MC. If no ("NO" in step S17.6), in step S17.7 the IPv6 packet is discarded.

If it is found that the IPv6 destination address of the IPv6 packet is an IPv6 address stored in the mapping table BGW-MC ("YES" in step S17.6), in step S17.8 the IPv6 packet is encapsulated with an IPv4 address header and an IPv4 transport header by using the values from the mapping table matching with this IPv6 address. Then, in step S17.9, this encapsulated packet is forwarded to the IPv4 address as found by the previous step S17.8.

According to the different situations in the steps of the communication A1 → B/response procedure shown in Fig. 16, it can be logically distinguished in the BGW's receiving and transmitting procedure according to Fig. 17 between the following two branches:
the left branch comprising the steps S17.1 to S17.5; and
the right branch comprising the step S17.1, the step S17.6, the step S17.8 and the step S17.9.

The middle branch (discarding of packets) comprising the step S17b.1 and the steps S17.6 and S17.7 is only used in the case if an IPv6 packet is received in the second gateway BGW which does not belong to the communication A1 → B/response procedure.

In the following, the description of the communication A1 → B/response procedure according to Fig. 16 will be continued. In step S14.6', in the second gateway BGW the BGW's receiving and transmitting procedure as described above and which is shown in Fig. 17 is started. Preferably, in step S14a.6' the BGW's receiving and transmitting procedure will take the left branch because the IPv6 destination address of the IPv6 packet is the second protocol third network second terminal address BA-6-3. This IPv6 address belongs to the address space of the B network. The following steps S14.7 to S14.9 are identical to the communication A1 → B/response procedure according to Fig. 14. Thus, a description of these steps is omitted here. After sending the reponse message from the second terminal B to the second gateway BGW in step S14.9, again the BGW's receiving and transmitting procedure according to Fig. 17 is started in step S14.10'. Preferably, in step S14.10' the BGW's receiving and transmitting procedure will take the right branch because the IPv6 destination address of the IPv6 packet at this stage is A1A-6-3 which does not belong to the IPv6 address space of the B network and because this IPv6 destination address A1A-6-3 is stored in the mapping table BGW-MC. The following steps S14.12 to S14.16 are identical to the communication A1 → B/response procedure as shown in Fig. 14 such that the description of these steps will not be repeated hereinafter.

### INDUSTRIAL APPLICABILITY

The present invention discloses a communication method, a communication terminal, and gateways in a communication system as shown in Fig. 3 and suggests a new mechanism how the communication can be established when a dual-stack terminal communicates with another IPv6 terminal over the IPv4 Internet. In various aspects of the invention a new mapping table located in the second gateway between the global IPv6 network and the global IPv4 network is described. In addition, a new receiving procedure of a dual-stack terminal is proposed.

Whilst above the essence of the invention was described with the specific reference to IPv4 (first protocol) and IPv6 (second protocol) networks, it may be noted that the concept of the invention, i.e. the provision of the mapping table and the fixed assignment of the second protocol address in the first terminal A1, may be extended to other types of networks having a system configuration as that shown in Fig. 3.

Furthermore, many of the figures of the present application show the specific uses of private and global address formats, however, other address formats designating the same information in a different format may be used. Furthermore, it may be noted that the invention may comprise other embodiments based on the teachings herein. For example, the invention may comprise embodiments, which result from a combination of steps and features, which have been separately described in the description and the claims.

Furthermore, the invention comprises a computer readable medium in which a program is embodied wherein the program is to make a data processing device execute the steps of the above-described methods in the first terminal A1, the first gateway AGW and the second gateway BGW. The invention may also comprise a computer program product including the computer readable medium as aforementioned.

Furthermore, the invention may also comprise a program having instructions adapted to carry out the steps of the aforementioned methods.

The invention also includes a program having instructions adapted to carry out one or more of the above mentioned method steps and/or the functional features of one or more of the apparatus or system units described.

Furthermore, the invention also includes a computer program product stored on a computer readable medium comprising code means adapted to carry out one or more of the above mentioned method steps and/or the functional features of one or more of the apparatus or system units described.

The invention also includes a data carrier having computer readable code embodied therein, comprising means adapted to carry out one or more of the above mentioned method steps and/or the functional features of one or more of the apparatus or system units described.

Furthermore, the invention also includes a computer readable medium, in which a program is embodied, wherein the program is to make data processing means execute one or more of the above mentioned method steps and/or the functional features of one or more of the apparatus or system units described.

Furthermore, reference numerals in the claims only serve clarification purposes and do not limit the scope of these claims.

## Claims

1. A communication method carried out in a communication system (SYS) including a first network (IN) implemented using a first protocol (IPv4), said first network (IN) being connected to a second network (PV4) implemented using said first protocol (IPv4) and a third network (GV6) implemented using a second protocol (IPv6) through a respective first and second gateway (AGW, BGW), for providing communication information (PAY) between a first terminal (A1) of said second network (PV4) and a second terminal (B) of said third network (GV6) wherein the respective location of the first and second terminals (A1, B) remains geographically substantially the same during a network session so that the terminals (A1, B) do not require location updated procedures or registration procedures during a network session;
said first and second protocols (IPv4, IPv6) being different;
said first and second networks (IN, PV4) using said first protocol (IPv4) for addressing in said first and second networks (IN, PV4);
said third network (GV6) using said second protocol (IPv6) for addressing in said third network (GV6);
said first to third networks (IN, PV4, GV6) respectively comprising first to third addresses;
said first and second addresses being respectively first protocol first network addresses and first protocol second network addresses respectively selected from different address ranges of said first protocol (IPv4), respectively a public address range and a private address range;
said third addresses being second protocol third network addresses;
wherein said communication method comprises the following steps:
a) setting up (S 7.1) a first protocol first tunnel (TUN1) between said first terminal (A1) and said first gateway (AGW), the first protocol first tunnel (TUN1) being set up by the encapsulation of a second protocol compliant data packet (SA6, DA6, TH6, PAY) comprising the communication information (PAY) with a first protocol compliant header (SA4, DA4, TH4);
b) transmitting (S 7.2) the data packet (SA4, DA4, TH4, SA6, DA6, TH6, PAY) through said first protocol first tunnel(TUN1);
c) receiving (S 7.3) the data packet (SA4, DA4, TH4, SA6, DA6, TH6, PAY) in said first gateway (AGW);
d) setting up (S 7.4) a first protocol second tunnel (TUN2) between said first gateway (AGW) and said second gateway (BGW), the first protocol second tunnel (TUN2) being set up by translating the first protocol compliant header (SA4, DA4, TH4) of the data packet (SA4, DA4, TH4, SA6, DA6, TH6, PAY), into the public address range;
e) transmitting (S 7.5) the data packet (SA4, DA4, TH4, SA6, DA6, TH6, PAY) through said first protocol second tunnel (TUN2);
f) receiving (S 7.6) the data packet (SA4, DA4, TH4, SA6, DA6, TH6, PAY) in said second gateway (BGW) and removing the first protocol compliant header (SA4, DA4, TH4) from the data packet;
g) transmitting (S 7.7) the data packet (SA6, DA6, TH6, PAY) through said third network (GV6) to said second terminal (B).

2. A communication method according to claim 1, wherein
said step a) (S 7.1) includes creating the second protocol compliant data packet (SA6, DA6, TH6, PAY) by encapsulating of at least said communication information (PAY) with a transport type identifying first header (TH6) at least including second protocol transport type specific information (A1T-6-3), and with a second-protocol first header (SA6, DA6) at least including a second protocol third network first terminal address (A1A-6-3) and a second protocol third network second terminal address (BA-6-3), and
the first protocol compliant header (SA4, DA4, TH4) comprises a transport type identifying second header (TH4) at least including first protocol second network transport type specific information (A1T-P4-2), and a first-protocol first header (SA4, DA4) at least including a first protocol second network first terminal address (A1A-P4-2) and a first protocol first network second gateway address (BGWA-G4-1).

3. A communication method according to claim 2, wherein said step d) (S 7.4) includes changing said transport type identifying second header (TH4) to a transport type identifying third header (TH4) at least including first protocol first network transport type specific information (A1T-G4-1), and changing said first-protocol first header (SA4, DA4) to a first-protocol second header (SA4, DA4) at least including a first protocol first network first gateway address (AGWA-G4-1) and said first protocol first network second gateway address (BGWA-G4-1).

4. A communication method according to claim 3, wherein
said step f) (S 7.6) includes:
storing said first protocol first network first gateway address (AGWA-G4-1), said first protocol first network transport type specific information (A1T-G4-1), and said second protocol third network first terminal address (A1A-6-3) in said second gateway (BGW).

5. A communication method according to claim 4, wherein
said first protocol first network first gateway address (AGWA-G4-1), said first protocol first network transport type specific information (A1T-G4-1), and said second protocol third network first terminal address (A1A-6-3) are stored in a mapping table.

6. A communication method according to claim 5, wherein in said mapping table
a mapping correlation (BGW-MC) is stored between said second protocol third network first terminal address (A1A-6-3) and a pair of said first protocol first network first gateway address (AGWA-G4-1) and said first protocol first network transport type specific information (A1T-G4-1).

7. A communication method according to one of the claims 1 to 6, wherein said method further comprises the following steps:
h) transmitting from said second terminal (B) at least a response communication information (RE-PAY) through said third network (GV6) to said second gateway (BGW);
i) receiving at least said response communication information (RE-PAY) in said second gateway (BGW ;
j) setting up a first protocol third tunnel(TUN3) between said second gateway (BGW) and said first gateway (AGW) ;
k) transmitting at least said response communication information (RE-PAY) through said first protocol third tunnel (TUN3);
l) receiving at least said response communication information (RE-PAY) in said first gateway (AGW);
m) setting up a first protocol fourth tunnel(TUN4) between said first gateway (AGW) and said first terminal (A1) ;
n) transmitting at least said response communication information (RE-PAY) through said first protocol fourth tunnel (TUN4);
o) receiving at least said response communication information (RE-PAY) in said first terminal (A1).

8. A communication method according to claim 7, wherein
before said step h) said response communication information (RE-PAY) is at least encapsulated with a transport type identifying fourth header at least including said second protocol third network transport type specific information (A1T-6-3) and with a second-protocol second header at least including said second protocol third network first terminal address (A1A-6-3).

9. A communication method according to one of the claims 7 or 8, wherein
said step j) includes encapsulating of at least said response communication information (RE-PAY) with a transport type identifying fifth header at least including said first protocol first network transport type specific information(A1T-G4-1), and with a first-protocol third header at least including said first protocol first network first gateway address (AGWA-G4-1) according to said mapping correlation (BGW-MC).

10. A communication method according to one of the claims 7 to 9, wherein
said step m) includes changing said transport type identifying fifth header to a transport type identifying sixth header at least including said first protocol second network transport type specific information (A1T-P4-2), and changing said first-protocol third header to a first-protocol fourth header at least including said first protocol second network first terminal address (A1A-P4-2).

11. A communication method according to one of the claims 7 to 10, wherein
said step o) includes determining whether a received packet comprises a transport type identifying header including said first protocol second network transport type specific information (A1T-P4-2).

12. A communication method according to claim 11, wherein
when it is determined that said received packet comprises a transport type identifying header including said first protocol second network transport type specific information (A1T-P4-2), said response communication information (RE-PAY) is decapsulated at least from said first-protocol fourth header and said transport type identifying sixth header.

13. A communication system including:
- a communication terminal (A1);
- a first gateway (AGW); and
- a second gateway (BGW);
the system being configured to operate in a broader communication system (SYS) including a first network (IN) implemented using a first protocol (IPv4), said first network (IN) being connected to a second network (PV4) implemented using said first protocol (IPv4) and a third network (GV6) implemented using a second protocol (IPv6) through the respective first and second gateway (AGW, BGW), for providing communication information (PAY) between the first terminal (A1) in said second network (PV4) and a second terminal (B) of said third network (GV6) wherein the respective location of the first and second terminals (A1, B) remains geographically substantially the same during a network session so that the terminals (A1, B) do not require location updated procedures or registration procedures during a network session;
said first and second protocols (IPv4, IPv6) being different;
said first and second networks (IN, PV4) using said first protocol (IPv4) for addressing in said first and second networks (IN, PV4);
said third network (GV6) using said second protocol (IPv6) for addressing in said third network (GV6);
said first to third networks (IN, PV4, GV6) respectively comprising first to third addresses;
said first and second addresses being respectively first protocol first network addresses and first protocol second network addresses respectively selected from different address ranges of said first protocol (IPv4), respectively a public address range and a private address range;
said third addresses being second protocol third network addresses;
wherein the system is arranged such that:
a) the communication terminal (A1) is arranged to set up (S 7.1) a first protocol first tunnel (TUN1) between said first terminal (A1) and said first gateway (AGW), the first protocol first tunnel (TUN1) being set up by the encapsulation of a second protocol compliant data packet (SA6, DA6, TH6, PAY) comprising the communication information (PAY) with a first protocol compliant header (SA4, DA4, TH4);
b) the communication terminal (A1) is further arranged to transmit (S 7.2) the data packet (SA4, DA4, TH4, SA6, DA6, TH6, PAY) through said first protocol first tunnel (TUN1);
c) the first gateway (AGW) is arranged to receive (S 7.3) the data packet (SA4, DA4, TH4, SA6, DA6, TH6, PAY) in said first gateway (AGW);
d) the first gateway (AGW) is further arranged to set up (S 7.4) a first protocol second tunnel (TUN2) between said first gateway (AGW) and said second gateway (BGW), the first protocol second tunnel (TUN2) being set up by translating the first protocol compliant header (SA4, DA4, TH4) of the data packet (SA4, DA4, TH4, SA6, DA6, TH6, PAY), into the public address range;
e) the first gateway (AGW) is further arranged to transmit(S 7.5) the data packet (SA4, DA4, TH4, SA6, DA6, TH6, PAY) through said first protocol second tunnel (TUN2) ;
f) the second gateway (BGW) is arranged to receive (S 7.6) the data packet (SA4, DA4, TH4, SA6, DA6, TH6, PAY) in said second gateway (BGW) and to remove the first protocol compliant header (SA4, DA4, TH4) from the data packet;
g) the second gateway (BGW) is arranged to transmit(S 7.7) the data, packet (SA6, DA6, TH6, PAY) through said third network (GV6) to said second terminal (B).

14. A communication system according to claim 13, wherein
the communication terminal (A1) is further arranged, during setting up (S 7.1), to create the second protocol compliant data packet (SA6, DA6, TH6, PAY) by encapsulating of at least said communication information (PAY) with a transport type identifying first header (TH6) at least including second protocol transport type specific information (A1T-6-3), and with a second-protocol first header (SA6, DA6) at least including a second protocol third network first terminal address (A1A-6-3) and a second protocol third network second terminal address (BA-6-3), and
the first protocol compliant header (SA4, DA4, TH4) comprises a transport type identifying second header (TH4) at least including first protocol second network transport type specific information (A1T-P4-2), and a first-protocol first header (SA4, DA4) at least including a first protocol second network first terminal address (A1A-P4-2) and a first protocol first network second gateway address (BGWA-G4-1).

15. A communication system according to claim 14, wherein
the first gateway (AGW) is further arranged, during setting up (S 7.4), to change said transport type identifying second header (TH4) to a transport type identifying third header (TH4) at least including first protocol first network transport type specific information (A1T-G4-1), and to change said first-protocol first header (SA4, DA4) to a first-protocol second header (SA4, DA4) at least including a first protocol first network first gateway address (AGWA-G4-1) and said first protocol first network second gateway address (BGWA-G4-1).

16. A communication system according to claim 15, wherein
the second gateway (BGW) is further arranged, during receiving (S 7.6), to :
store said first protocol first network first gateway address (AGWA-G4-1), said first protocol first network transport type specific information (A1T-G4-1), and said second protocol third network first terminal address (A1A-6-3) in said second gateway (BGW).

17. A communication system according to claim 16, wherein
said first protocol first network first gateway address (AGWA-G4-1), said first protocol first network transport type specific information (A1T-G4-1), and said second protocol third network first terminal address (A1A-6-3) are arranged to be stored in a mapping table.

18. A communication system according to claim 17, wherein in said mapping table
a mapping correlation (BGW-MC) is stored between said second protocol third network first terminal address (A1A-6-3) and a pair of said first protocol first network first gateway address (AGWA-G4-1) and said first protocol first network transport type specific information (A1T-G4-1).

19. A communication system according to one of the claims 13 to 18, further including the second terminal (B), wherein said system is further arranged such that:
h) the second terminal (B) is arranged to transmit at least a response communication information (RE-PAY) through said third network (GV6) to said second gateway (BGW);
i) the second gateway (BGW) is further arranged to receive at least said response communication information (RE-PAY);
j) the second gateway (BGW) is further arranged to set up a first protocol third tunnel (TUN3) between said second gateway (BGW) and said first gateway (AGW);
k) the second gateway (BGW) is further arranged to transmit at least said response communication information (RE-PAY) through said first protocol third tunnel (TUN3);
l) the first gateway (AGW) is further arranged to receive at least said response communication information (RE-PAY);
m) the first gateway (AGW) is further arranged to set up a first protocol fourth tunnel(TUN4) between said first gateway (AGW) and said first terminal (A1);
n) the first gateway (AGW) is further arranged to transmit at least said response communication information (RE-PAY) through said first protocol fourth tunnel (TUN4);
o) the first terminal (A1) is further arranged to receive at least said response communication information (RE-PAY).

20. A communication system according to claim 19, wherein the second terminal (B) is further arranged so that, before carrying out said operation h), said response communication information (RE-PAY) is at least encapsulated with a transport type identifying fourth header at least including said second protocol third network transport type specific information (A1T-6-3) and with a second-protocol second header at least including said second protocol third network first terminal address (A1A-6-3)

21. A communication system according to one of the claims 19 or 20, wherein
the second gateway (BGW) is further arranged to, during operation j), encapsulate at least said response communication information (RE-PAY) with a transport type identifying fifth header at least including said first protocol first network transport type specific information (A1T-G4-1), and with a first-protocol third header at least including said first protocol first network first gateway address (AGWA-G4-1) according to said mapping correlation (BGW-MC).

22. A communication system according to one of the claims 19 to 21, wherein
the first gateway (AGW) is further arranged to, during operation m), change said transport type identifying fifth header to a transport type identifying sixth header at least including said first protocol second network transport type specific information (A1T-P4-2), and to change said first-protocol third header to a first-protocol fourth header at least including said first protocol second network first terminal address (A1A-P4-2).

23. A communication system according to one of the claims 19 to 22, wherein
the first terminal (A1) is further arranged to, during operation o), determine whether a received packet comprises a transport type identifying header including said first protocol second network transport type specific information (A1T-P4-2).

24. A communication system according to claim 23, wherein,
when it is determined that said received packet comprises a transport type identifying header including said first protocol second network transport type specific information (A1T-P4-2), said response communication information (RE-PAY) is decapsulated at least from said first-protocol fourth header and said transport type identifying sixth header.

25. A program having instructions adapted to carry out one or more of the method steps of any one or more of the method claims 1 to 12.

26. A computer program product stored on a computer readable medium comprising code means adapted to carry out one or more of the method steps of any one or more of the method claims 1 to 12.

## Patentansprüche

1. Kommunikationsverfahren, das in einem Kommunikationssystem (SYS) mit einem ersten Netzwerk (IN) ausgeführt wird, das mit Verwendung eines ersten Protokolls (IPv4) implementiert ist, wobei das erste Netzwerk (IN) mit einem zweiten Netzwerk (PV4), das mit Verwendung des ersten Protokolls (IPv4) implementiert ist, und einem dritten Netzwerk (GV6), das mit Verwendung eines zweiten Protokolls (IPv6) implementiert ist, durch ein jeweiliges erstes bzw. zweites Gateway (AGW, BGW) verbunden ist, zum Bereitstellen einer Kommunikationsinformation (PAY) zwischen einem ersten Endgerät (A1) des zweiten Netzwerks (PV4) und einem zweiten Endgerät (B) des dritten Netzwerks (GV6), wobei der jeweilige Ort des ersten und des zweiten Endgerätes (A1, B) geographisch im Wesentlichen derselbe während einer Netzwerksitzung bleibt, so dass die Endgeräte (A1, B) nicht Ortsaktualisierte Prozeduren oder Registrierungsprozeduren während einer Netzwerksitzung erfordern;
wobei das erste und das zweite Protokoll (IPv4, IPv6) unterschiedlich sind;
wobei das erste und das zweite Netzwerk (IN, PV4) das erste Protokoll (IPv4) zur Adressierung in dem ersten und dem zweiten Netzwerk (IN, PV4) verwenden;
wobei das dritte Netzwerk (GV6) das zweite Protokoll (IPv6) zur Adressierung in dem dritten Netzwerk (GV6) verwendet;
wobei die ersten bis dritten Netzwerke (IN, PV4, GV6) jeweils erste bis dritte Adressen umfassen;
wobei die ersten und zweiten Adressen jeweils Adressen des ersten Protokolls des ersten Netzwerks bzw. Adressen des ersten Protokolls des zweiten Netzwerks sind, die jeweils aus unterschiedlichen Adressbereichen des ersten Protokolls (IPv4) ausgewählt sind, jeweils einem öffentlichen Adressbereich und einem privaten Adressbereich;
wobei die dritten Adressen Adressen des zweiten Protokolls des dritten Netzwerks sind;
wobei das Kommunikationsverfahren die folgenden Schritte umfasst:
a) Errichten (S 7.1) eines ersten Tunnels des ersten Protokolls (TUN1) zwischen dem ersten Endgerät (A1) und dem ersten Gateway (AGW), wobei der erste Tunnel des ersten Protokolls (TUN1) errichtet wird durch die Kapselung eines mit dem zweiten Protokoll konformen Datenpakets (SA6, DA6, TH6, PAY), das die Kommunikationsinformation (PAY) umfasst, mit einem mit dem ersten Protokoll konformen Header (SA4, DA4, TH4);
b) Übertragen (S 7.2) des Datenpakets (SA4, DA4, TH4, SA6, DA6, TH6, PAY) durch den ersten Tunnel des ersten Protokolls (TUN1);
c) Empfangen (S 7.3) des Datenpakets (SA4, DA4, TH4, SA6, DA6, TH6, PAY) in dem ersten Gateway (AGW);
d) Errichten (S 7.4) eines zweiten Tunnels des ersten Protokolls (TUN2) zwischen dem ersten Gateway (AGW) und dem zweiten Gateway (BGW), wobei der zweite Tunnel des ersten Protokolls (TUN2) errichtet wird durch Übersetzen des mit dem ersten Protokoll konformen Headers (SA4, DA4, TH4) des Datenpakets (SA4, DA4, TH4, SA6, DA6, TH6, PAY) in den öffentlichen Adressbereich;
e) Übertragen (S 7.5) des Datenpakets (SA4, DA4, TH4, SA6, DA6, TH6, PAY) durch den zweiten Tunnel des ersten Protokolls (TUN2);
f) Empfangen (S 7.6) des Datenpakets (SA4, DA4, TH4, SA6, DA6, TH6, PAY) in dem zweiten Gateway (BGW) und Entfernen des mit dem ersten Protokoll konformen Headers (SA4, DA4, TH4) von dem Datenpaket;
g) Übertragen (S 7.7) des Datenpakets (SA4, DA6, TH6, PAY) durch das dritte Netzwerk (GV6) an das zweite Endgerät (B).

2. Kommunikationsverfahren gemäß Anspruch 1, wobei
der Schritt a) (S 7.1) ein Erschaffen des mit dem zweiten Protokoll konformen Datenpakets (SA6, DA6, TH6, PAY) enthält mittels Kapseln wenigstens der Kommunikationsinformation (PAY) mit einem einen Transporttyp-identifizierenden ersten Header (TH6), der wenigstens eine Transporttyp-spezifische Information des zweiten Protokolls (A1T-6-3) enthält, und mit einem ersten Header des zweiten Protokolls (SA6, DA6), der wenigstens eine Adresse des zweiten Protokolls des dritten Netzwerks des ersten Endgerätes (A1A-6-3) und eine Adresse des zweiten Protokolls des dritten Netzwerks des zweiten Endgerätes (BA-6-3) enthält, und
der mit dem ersten Protokoll konforme Header (SA4, DA4, TH4) einen Transporttyp-identifizierenden zweiten Header (TH4), der wenigstens eine Transporttyp-spezifische Information des ersten Protokolls des zweiten Netzwerks (A1T-P4-2) enthält, und einen ersten Header des ersten Protokolls (SA4, DA4) umfasst, der wenigstens eine Adresse des ersten Protokolls des zweiten Netzwerks des ersten Endgerätes (A1A-P4-2) und eine Adresse des ersten Protokolls des ersten Netzwerks des zweiten Gateways (BGWA-G4-1) enthält.

3. Kommunikationsverfahren gemäß Anspruch 2, wobei der Schritt d) (S 7.4) ein Ändern des den Transporttyp-identifizierenden zweiten Headers (TH4) auf einen Transporttyp-identifizierenden dritten Header (TH4), der wenigstens eine Transporttyp-spezifische Information des ersten Protokolls des ersten Netzwerks (A1T-G4-1) enthält, und ein Ändern des ersten Headers des ersten Protokolls (SA4, DA4) zu einem zweiten Header des ersten Protokolls (SA4, DA4) enthält, der wenigstens eine Adresse des ersten Protokolls des ersten Netzwerks des ersten Gateways (AGWA-G4-1) und die Adresse des ersten Protokolls des ersten Netzwerks des zweiten Gateways (BGWA-G4-1) enthält.

4. Kommunikationsverfahren gemäß Anspruch 3, wobei
der Schritt f) (S 7.6) enthält:
Speichern der Adresse des ersten Protokolls des ersten Netzwerks des ersten Gateways (AGWA-G4-1), der Transporttyp-spezifischen Information des ersten Protokolls des ersten Netzwerks (A1T-G4-1) und der Adresse des zweiten Protokolls des dritten Netzwerks des ersten Endgeräts (A1A-6-3) in dem zweiten Gateway (BGW).

5. Kommunikationsverfahren gemäß Anspruch 4, wobei
die Adresse des ersten Protokolls des ersten Netzwerks des ersten Gateways (AGWA-G4-1), die Transporttyp-spezifische Information des ersten Protokolls des ersten Netzwerks (A1T-G4-1) und die Adresse des zweiten Protokolls des dritten Netzwerks des ersten Endgerätes (A1A-6-3) in einer Abbildungstabelle gespeichert werden.

6. Kommunikationsverfahren gemäß Anspruch 5, wobei in der Abbildungstabelle
eine Abbildungskorrelation (BGW-MC) zwischen der Adresse des zweiten Protokolls des dritten Netzwerks des ersten Endgerätes (A1A-6-3) und einem Paar der Adresse des ersten Protokolls des ersten Netzwerks des ersten Gateways (AGWA-G4-1) und der Transporttyp-spezifischen Information des ersten Protokolls des ersten Netzwerks (A1T-G4-1) gespeichert wird.

7. Kommunikationsverfahren gemäß einem der Ansprüche 1 bis 6, wobei das Verfahren ferner die folgenden Schritte umfasst:
h) Übertragen von dem zweiten Endgerät (B) wenigstens einer Antwortkommunikationsinformation (RE-PAY) durch das dritte Netzwerk (GV6) an das zweite Gateway (BGW);
i) Empfangen wenigstens einer Antwortkommunikationsinformation (RE-PAY) in dem zweiten Gateway (BGW);
j) Errichten eines dritten Tunnels des ersten Protokolls (TUN3) zwischen dem zweiten Gateway (BGW) und dem ersten Gateway (AGW);
k) Übertragen wenigstens der Antwortkommunikationsinformation (RE-PAY) durch den dritten Tunnel des ersten Protokolls (TUN3);
l) Empfangen wenigstens der Antwortkommunikationsinformation (RE-PAY) in dem ersten Gateway (AGW);
m) Errichten eines vierten Tunnels des ersten Protokolls (TUN4) zwischen dem ersten Gateway (AGW) und dem ersten Endgerät (A1);
n) Übertragen wenigstens der Antwortkommunikationsinformation (RE-PAY) durch den vierten Tunnel des ersten Protokolls (TUN4);
o) Empfangen wenigstens der Antwortkommunikationsinformation (RE-PAY) in dem ersten Endgerät (A1).

8. Kommunikationsverfahren gemäß Anspruch 7, wobei
vor dem Schritt h) die Antwortkommunikationsinformation (RE-PAY) wenigstens mit einem Transporttyp-identifizierenden vierten Header, der wenigstens die Transporttyp-spezifische Information des zweiten Protokolls des dritten Netzwerks (A1T-6-3) enthält, und mit einem zweiten Header des zweiten Protokolls gekapselt wird, der wenigstens die Adresse des zweiten Protokolls des dritten Netzwerks des ersten Endgerätes (A1A-6-3) enthält.

9. Kommunikationsverfahren gemäß einem der Ansprüche 7 oder 8, wobei
der Schritt j) ein Kapseln wenigstens der Antwortkommunikationsinformation (RE-PAY) mit einem Transporttyp-identifizierenden fünften Header, der wenigstens die Transporttyp-spezifische Information des ersten Protokolls des ersten Netzwerks (A1T-G4-1) enthält, und mit einem dritten Header des ersten Protokolls, der wenigstens die Adresse des ersten Protokolls des ersten Netzwerks des ersten Gateways (AGWA-G4-1), gemäß der Abbildungskorrelation (BGW-MC) enthält.

10. Kommunikationsverfahren gemäß einem der Ansprüche 7 bis 9, wobei
der Schritt m) ein Ändern des Transporttyp-identifizierenden fünften Headers zu einem Transporttyp-identifizierenden sechsten Header, der wenigstens die Transporttyp-spezifische Information des ersten Protokolls des zweiten Netzwerks (A1T-P4-2) enthält, und ein Ändern des dritten Headers des ersten Protokolls zu einem vierten Header des ersten Protokolls enthält, der wenigstens die Adresse des ersten Protokolls des zweiten Netzwerks des ersten Endgerätes (A1A-P4-2) enthält.

11. Kommunikationsverfahren gemäß einem der Ansprüche 7 bis 10, wobei
der Schritt o) ein Bestimmen enthält, ob ein empfangenes Paket einen Transporttyp-identifizierenden Header umfasst, der die Transporttyp-spezifische Information des ersten Protokolls des zweiten Netzwerks (A1T-P4-2) enthält.

12. Kommunikationsverfahren gemäß Anspruch 11, wobei
wenn bestimmt wird, dass das empfangene Paket einen Transporttyp-identifizierenden Header enthält, der die Transporttyp-spezifische Information des ersten Protokolls des zweiten Netzwerks (A1T-P4-2) enthält, die Antwortkommunikationsinformation (RE-PAY) wenigstens von dem vierten Header des ersten Protokolls und dem Transporttyp-identifizierenden sechsten Header entkapselt wird.

13. Kommunikationssystem mit:
- einem Kommunikationsendgerät (A1);
- einem ersten Gateway (AGW); und
- einem zweiten Gateway (BGW);
wobei das System konfiguriert ist zum Arbeiten in einem breiteren Kommunikationssystem (SYS) mit einem ersten Netzwerk (IN), das mit Verwendung eines ersten Protokolls (IPv4) implementiert ist, wobei das erste Netzwerk (IN) mit einem zweiten Netzwerk (PV4), das mit Verwendung des ersten Protokolls (IPv4) implementiert ist, und einem dritten Netzwerk (GV6), das mit Verwendung eines zweiten Protokolls (IPv6) implementiert ist, durch das jeweilige erste bzw. zweite Gateway (AGW, BGW) verbunden ist, zum Bereitstellen einer Kommunikationsinformation (PAY) zwischen dem ersten Endgerät (A1) in dem zweiten Netzwerk (PV4) und einem zweiten Endgerät (B) des dritten Netzwerks (GV6), wobei der jeweilige Ort des ersten und des zweiten Endgeräts (A1, B) geographisch im Wesentlichen derselbe während einer Netzwerksitzung bleibt, so dass die Endgeräte (A1, B) nicht Ortsaktualisierte Prozeduren oder Registrierungsprozeduren während einer Netzwerksitzung erfordern;
wobei die ersten und zweiten Protokolle (IPv4, IPv6) unterschiedlich sind;
wobei die ersten und zweiten Netzwerke (IN, PV4) das erste Protokoll (IPv4) zur Adressierung in den ersten und zweiten Netzwerken (IN, PV4) verwenden;
wobei das dritte Netzwerk (GV6) das zweite Protokoll (IPv6) zur Adressierung in dem dritten Netzwerk (GV6) verwendet;
wobei die ersten bis dritten Netzwerke (IN, PV4, GV6) jeweils erste bis dritte Adressen umfassen;
wobei die ersten und zweiten Adressen jeweils Adressen des ersten Protokolls des ersten Netzwerks bzw. Adressen des ersten Protokolls des zweiten Netzwerks sind, die jeweils aus unterschiedlichen Adressbereichen des ersten Protokolls (IPv4) ausgewählt sind, jeweils einem öffentlichen Adressbereich und einem privaten Adressbereich;
wobei die dritten Adressen Adressen des zweiten Protokolls des dritten Netzwerks sind;
wobei das System eingerichtet ist, so dass:
a) das Kommunikationsendgerät (A1) eingerichtet ist zum Errichten (S 7.1) eines ersten Tunnels des ersten Protokolls (TUN1) zwischen dem ersten Endgerät (A1) und dem ersten Gateway (AGW), wobei der erste Tunnel des ersten Protokolls (TUN1) mittels der Kapselung eines mit dem zweiten Protokoll konformen Datenpakets (SA6, DA6, TH6, PAY), das die Kommunikationsinformation (PAY) umfasst, mit einem mit dem ersten Protokoll konformen Header (SA4, DA4, TH4) errichtet wird;
b) das Kommunikationsendgerät (A1) ferner eingerichtet ist zum Übertragen (S 7.2) des Datenpakets (SA4, DA4, TH4, SA6, DA6, TH6, PAY) durch den ersten Tunnel des ersten Protokolls (TUN1);
c) das erste Gateway (AGW) eingerichtet ist zum Empfangen (S 7.3) des Datenpakets (SA4, DA4, TH4, SA6, DA6, TH6, PAY) in dem ersten Gateway (AGW);
d) das erste Gateway (AGW) ferner eingerichtet ist zum Errichten (S 7.4) eines zweiten Tunnels des ersten Protokolls (TUN2) zwischen dem ersten Gateway (AGW) und dem zweiten Gateway (BGW), wobei der zweite Tunnel des ersten Protokolls (TUN2) errichtet wird mittels Übersetzen des mit dem ersten Protokoll konformen Headers (SA4, DA4, TH4) des Datenpakets (SA4, DA4, TH4, SA6, DA6, TH6, PAY) in den öffentlichen Adressbereich;
e) das erste Gateway (AGW) ferner eingerichtet ist zum Übertragen (S 7.5) der Paketdaten (SA4, DA4, TH4, SA6, DA6, TH6, PAY) durch den zweiten Tunnel des ersten Protokolls (TUN2);
f) das zweite Gateway (BGW) eingerichtet ist zum Empfangen (S 7.6) der Paketdaten (SA4, DA4, TH4, SA6, DA6, TH6, PAY) in dem zweiten Gateway (BGW) und zum Entfernen des mit dem ersten Protokoll konformen Headers (SA4, DA4, TH4) von dem Datenpaket;
g) das zweiten Gateway (BGW) eingerichtet ist zum Übertragen (S 7.7) der Paketdaten (SA6, DA6, TH6, PAY) durch das dritte Netzwerk (GV6) an das zweite Endgerät (B).

14. Kommunikationssystem gemäß Anspruch 13, wobei
das Kommunikationsendgerät (A1) ferner eingerichtet ist zum Erschaffen, während des Errichtens (S 7.1), des mit dem zweiten Protokoll konformen Datenpakets (SA6, DA6, TH6, PAY) mittels Kapseln wenigstens der Kommunikationsinformation (PAY) mit einem einen Transporttyp-identifizierenden ersten Header (TH6), der wenigstens eine Transporttyp-spezifische Information des zweiten Protokolls (A1T-6-3) enthält, und mit einem ersten Header des zweiten Protokolls (SA6, DA6), der wenigstens eine Adresse des zweiten Protokolls des dritten Netzwerks des ersten Endgeräts (A1A-6-3) und eine Adresse des zweiten Protokolls des dritten Netzwerks des zweiten Endgerätes (BA-6-3) enthält, und
der mit dem ersten Protokoll konforme Header (SA4, DA4, TH4) einen Transporttyp-identifizierenden zweiten Header (TH4), der wenigstens eine Transporttyp-spezifische Information des ersten Protokolls des zweiten Netzwerks (A1T-P4-2) enthält, und einen ersten Header des ersten Protokolls (SA4, DA4) enthält, der wenigstens eine Adresse des ersten Protokolls des zweiten Netzwerks des ersten Endgerätes (A1A-P4-2) und eine Adresse des ersten Protokolls des ersten Netzwerks des zweiten Gateways (BGWA-G4-1) enthält.

15. Kommunikationssystem gemäß Anspruch 14, wobei:
das erste Gateway (AGW) ferner eingerichtet ist zum Ändern, während des Errichtens (S 7.4), des Transporttyp-identifizierenden zweiten Headers (TH4) zu einem Transporttyp-identifizierenden dritten Header (TH4), der wenigstens eine Transporttyp-spezifische Information des ersten Protokolls des ersten Netzwerks (A1T-G4-1) enthält, und zum Ändern des ersten Headers des ersten Protokolls (SA4, DA4) zu einem zweiten Header des ersten Protokolls (SA4, DA4), der wenigstens eine Adresse des ersten Protokolls des ersten Netzwerks des ersten Gateways (AGWA-G4-1) und die Adresse des ersten Protokolls des ersten Netzwerks des zweiten Gateways (BGWA-G4-1) enthält.

16. Kommunikationssystem gemäß Anspruch 15, wobei
das zweite Gateway (BGW) ferner eingerichtet ist, während des Empfangens (S 7.6), zum:
Speichern der Adresse des ersten Protokolls des ersten Netzwerks des ersten Gateways (AGWA-G4-1), der Transporttyp-spezifischen Information des ersten Protokolls des ersten Netzwerks (A1T-G4-1) und der Adresse des zweiten Protokolls des dritten Netzwerks des ersten Endgerätes (A1A-6-3) in dem zweiten Gateway (BGW).

17. Kommunikationssystem gemäß Anspruch 16, wobei
die Adresse des ersten Protokolls des ersten Netzwerks des ersten Gateways (AGWA-G4-1), die Transporttyp-spezifische Information des ersten Protokolls des ersten Netzwerks (A1T-G4-1) und die Adresse des zweiten Protokolls des dritten Netzwerks des ersten Endgerätes (A1A-6-3) eingerichtet sind, in einer Abbildungstabelle gespeichert zu sein.

18. Kommunikationssystem gemäß Anspruch 17, wobei in der Abbildungstabelle
eine Abbildungskorrelation (BGW-MC) zwischen der Adresse des zweiten Protokolls des dritten Netzwerks des ersten Endgerätes (A1A-6-3) und einem Paar der Adresse des ersten Protokolls des ersten Netzwerks des ersten Gateways (AGWA-G4-1) und der Transporttyp-spezifischen Information des ersten Protokolls des ersten Netzwerks (A1T-G4-1) gespeichert ist.

19. Kommunikationssystem gemäß einem der Ansprüche 13 bis 18 mit ferner dem zweiten Endgerät (B), wobei das System ferner eingerichtet ist, so dass:
h) das zweite Endgerät (B) eingerichtet ist zum Übertragen wenigstens einer Antwortkommunikationsinformation (RE-PAY) durch das dritte Netzwerk (GV6) an das zweite Gateway (BGW);
i) das zweite Gateway (BGW) ferner eingerichtet ist zum Empfangen wenigstens der Antwortkommunikationsinformation (RE-PAY);
j) das zweite Gateway (BGW) ferner eingerichtet ist zum Errichten eines dritten Tunnels des ersten Protokolls (TUN3) zwischen dem zweiten Gateway (BGW) und dem ersten Gateway (AGW);
k) das zweite Gateway (BGW) ferner eingerichtet ist zum Übertragen wenigstens der Antwortkommunikationsinformation (RE-PAY) durch den dritten Tunnel des ersten Protokolls (TUN3);
l) das erste Gateway (AGW) ferner eingerichtet ist zum Empfangen wenigstens der Antwortkommunikationsinformation (RE-PAY);
m) das erste Gateway (AGW) ferner eingerichtet ist zum Errichten eines vierten Tunnels des ersten Protokolls (TUN4) zwischen dem ersten Gateway (AGW) und dem ersten Endgerät (A1);
n) das erste Gateway (AGW) ferner eingerichtet ist zum Übertragen wenigstens der Antwortkommunikationsinformation (RE-PAY) durch den vierten Tunnel des ersten Protokolls (TUN4);
o) das erste Endgerät (A1) ferner eingerichtet ist zum Empfangen wenigstens der Antwortkommunikationsinformation (RE-PAY).

20. Kommunikationssystem gemäß Anspruch 19, wobei
das zweite Endgerät (B) ferner eingerichtet ist, so dass, vor Ausführen der Operation h), die Antwortkommunikationsinformation (RE-PAY) wenigstens gekapselt wird mit einem einen Transporttyp-identifizierenden vierten Header, der wenigstens die Transporttyp-spezifische Information des zweiten Protokolls des dritten Netzwerks (A1T-6-3) enthält, und mit einem zweiten Header des zweiten Protokolls, der wenigstens die Adresse des zweiten Protokolls des dritten Netzwerks des ersten Endgerätes (A1A-6-3) enthält.

21. Kommunikationssystem gemäß einem der Ansprüche 19 oder 20, wobei
das zweite Gateway (BGW) ferner eingerichtet ist zum Kapseln, während Operation j), wenigstens der Antwortkommunikationsinformation (RE-PAY) mit einem einen Transporttyp-identifizierenden fünften Header, der wenigstens die Transporttyp-spezifische Information des ersten Protokolls des ersten Netzwerks (A1T-G4-1) enthält, und mit einem dritten Header des ersten Protokolls, der wenigstens die Adresse des ersten Protokolls des ersten Netzwerks des ersten Gateways (AGWA-G4-1) enthält, gemäß der Abbildungskorrelation (BGW-MC).

22. Kommunikationssystem gemäß einem der Ansprüche 19 bis 21, wobei
das erste Gateway (AGW) ferner eingerichtet ist zum Ändern, während Operation m), des den Transporttyp-identifizierenden fünften Headers zu einem Transporttyp-identifizierenden sechsten Header, der wenigstens die Transporttyp-spezifische Information des ersten Protokolls des zweiten Netzwerks (A1T-P4-2) enthält, und zum Ändern des dritten Headers des ersten Protokolls zu einem vierten Header des ersten Protokolls, der wenigstens die Adresse des ersten Protokolls des zweiten Netzwerks des ersten Endgerätes (A1A-P4-2) enthält.

23. Kommunikationssystem gemäß einem der Ansprüche 19 bis 22, wobei
das erste Endgerät (A1) ferner eingerichtet ist zum Bestimmen, während Operation o), ob ein empfangenes Paket einen Transporttyp-identifizierenden Header umfasst, der die Transporttyp-spezifische Information des ersten Protokolls des zweiten Netzwerks (A1T-P4-2) enthält.

24. Kommunikationssystem gemäß Anspruch 23, wobei
wenn bestimmt ist, dass das empfangene Paket einen Transporttyp-identifizierenden Header umfasst, der die Transporttyp-spezifische Information des ersten Protokolls des zweiten Netzwerks (A1T-P4-2) enthält, die Antwortkommunikationsinformation (RE-PAY) wenigstens von dem vierten Header des ersten Protokolls und dem Transporttyp-identifizierenden sechsten Header entkapselt wird.

25. Programm mit Anweisungen, die ausgebildet sind zum Ausführen eines oder mehrerer der Verfahrensschritte von einem oder mehreren der Verfahrensansprüche 1 bis 12.

26. Computerprogrammprodukt, das auf einem Computerlesbaren Medium gespeichert ist, mit Code-Mitteln, die ausgebildet sind zum Ausführen eines oder mehrerer der Verfahrensschritte von einem oder mehreren der Verfahrensansprüche 1 bis 12.

## Revendications

1. Procédé de communication exécuté dans un système de communication (SYS) comprenant un premier réseau (IN) mis en oeuvre en utilisant un premier protocole (IPv4), ledit premier réseau (IN) étant connecté à un deuxième réseau (PV4) mis en oeuvre en utilisant ledit premier protocole (IPv4) et à un troisième réseau (GV6) mis en oeuvre en utilisant un second protocole (IPv6) par l'intermédiaire de première et seconde passerelles respectives (AGW, BGW), pour fournir des informations de communication (PAY) entre un premier terminal (A1) dudit deuxième réseau (PV4) et un second terminal (B) dudit troisième réseau (GV6) dans lequel l'emplacement respectif des premier et second terminaux (A1, B) reste géographiquement sensiblement le même pendant une session de réseau de sorte que les terminaux (A1, B) n'exigent pas de procédures de mise à jour d'emplacement ou de procédures d'enregistrement pendant une session de réseau ;
lesdits premier et second protocoles (IPv4, IPv6) étant différents ;
lesdits premier et deuxième réseaux (IN, PV4) utilisant ledit premier protocole (IPv4) pour l'adressage dans lesdits premier et deuxième réseaux (IN, PV4) ;
ledit troisième réseau (GV6) utilisant ledit second protocole (IPv6) pour l'adressage dans ledit troisième réseau (GV6) ;
lesdits premier au troisième réseaux (IN, PV4, GV6) comprenant respectivement des premières à troisièmes adresses ;
lesdites premières et deuxièmes adresses étant respectivement des adresses de premier réseau premier protocole et des adresses de deuxième réseau premier protocole respectivement sélectionnées à partir de plages d'adresses différentes dudit premier protocole (IPv4), respectivement une plage d'adresses publiques et une plage d'adresses privées ;
lesdites troisièmes adresses étant des adresses de troisième réseau second protocole ;
dans lequel ledit procédé de communication comprend les étapes suivantes consistant à :
a) paramétrer (S 7.1) un premier tunnel de premier protocole (TUN1) entre ledit premier terminal (A1) et ladite première passerelle (AGW), le premier tunnel de premier protocole (TUN1) étant paramétré par l'encapsulation d'un paquet de données conforme au second protocole (SA6, DA6, TH6, PAY) comprenant les informations de communication (PAY) avec un en-tête conforme au premier protocole (SA4, DA4, TH4) ;
b) transmettre (S 7.2) le paquet de données (SA4, DA4, TH4, SA6, DA6, TH6, PAY) par l'intermédiaire dudit premier tunnel de premier protocole (TUN1) ;
c) recevoir (S 7.3) le paquet de données (SA4, DA4, TH4, SA6, DA6, TH6, PAY) dans ladite première passerelle (AGW) ;
d) paramétrer (S 7.4) un deuxième tunnel de premier protocole (TUN2) entre ladite première passerelle (AGW) et ladite seconde passerelle (BGW), le deuxième tunnel de premier protocole (TUN2) étant paramétré en traduisant l'en-tête conforme au premier protocole (SA4, DA4, TH4) du paquet de données (SA4, DA4, TH4, SA6, DA6, TH6, PAY) dans la plage d'adresses publiques ;
e) transmettre (S 7.5) le paquet de données (SA4, DA4, TH4, SA6, DA6, TH6, PAY) par l'intermédiaire dudit deuxième tunnel de premier protocole (TUN2) ;
f) recevoir (S 7.6) le paquet de données (SA4, DA4, TH4, SA6, DA6, TH6, PAY) dans ladite seconde passerelle (BGW) et enlever l'en-tête conforme au premier protocole (SA4, DA4, TH4) du paquet de données ;
g) transmettre (S 7.7) le paquet de données (SA6, DA6, TH6, PAY) par l'intermédiaire dudit troisième réseau (GV6) audit second terminal (B).

2. Procédé de communication selon la revendication 1, dans lequel :
ladite étape a) (S 7.1) comprend la création du paquet de données conforme au second protocole (SA6, DA6, TH6, PAY) en encapsulant au moins lesdites informations de communication (PAY) avec un premier en-tête d'identification de type de transport (TH6) comprenant au moins des informations spécifiques au type de transport de second protocole (A1T-6-3), et avec un premier en-tête de second protocole (SA6, DA6) comprenant au moins une adresse de premier terminal troisième réseau second protocole (A1A-6-3) et une adresse de second terminal troisième réseau second protocole (BA-6-3), et
l'en-tête conforme au premier protocole (SA4, DA4, TH4) comprend un deuxième en-tête d'identification de type de transport (TH4) comprenant au moins des informations spécifiques au type de transport de deuxième réseau premier protocole (A1T-P4-2), et un premier en-tête de premier protocole (SA4, DA4) comprenant au moins une adresse de premier terminal deuxième réseau premier protocole (A1A-P4-2) et une adresse de seconde passerelle premier réseau premier protocole (BGWA-G4-1).

3. Procédé de communication selon la revendication 2, dans lequel :
ladite étape d) (S 7.4) comprend le changement dudit deuxième en-tête d'identification de type de transport (TH4) par un troisième en-tête d'identification de type de transport (TH4) comprenant au moins des informations spécifiques au type de transport de premier réseau premier protocole (A1T-G4-1), et le changement dudit premier en-tête de premier protocole (SA4, DA4) par un deuxième en-tête de premier protocole (SA4, DA4) comprenant au moins une adresse de première passerelle premier réseau premier protocole (AGWA-G4-1) et ladite adresse de seconde passerelle premier réseau premier protocole (BGWA-G4-1).

4. Procédé de communication selon la revendication 3, dans lequel :
ladite étape f) (S 7.6) comprend :
le stockage de ladite adresse de première passerelle premier réseau premier protocole (AGWA-G4-1), desdites informations spécifiques au type de transport de premier réseau premier protocole (A1T-G4-1), et de ladite adresse de premier terminal troisième réseau second protocole (A1A-6-3) dans ladite seconde passerelle (BGW).

5. Procédé de communication selon la revendication 4, dans lequel :
ladite adresse de première passerelle premier réseau premier protocole (AGWA-G4-1), lesdites informations spécifiques au type de transport de premier réseau premier protocole (A1T-G4-1), et ladite adresse de premier terminal troisième réseau second protocole (A1A-6-3) sont stockées dans une table de mise en correspondance.

6. Procédé de communication selon la revendication 5, dans lequel, dans ladite table de mise en correspondance :
une corrélation de mise en correspondance (BGW-MC) est stockée entre ladite adresse de premier terminal troisième réseau second protocole (A1A-6-3) et un couple de ladite adresse de première passerelle premier réseau premier protocole (AGWA-G4-1) et desdites informations spécifiques au type de transport de premier réseau premier protocole (A1T-G4-1).

7. Procédé de communication selon l'une des revendications 1 à 6, dans lequel ledit procédé comprend en outre les étapes suivantes consistant à :
h) transmettre à partir dudit second terminal (B) au moins des informations de communication de réponse (RE-PAY) par l'intermédiaire dudit troisième réseau (GV6) à ladite seconde passerelle (BGW) ;
i) recevoir au moins lesdites informations de communication de réponse (RE-PAY) dans ladite seconde passerelle (BGW) ;
j) paramétrer un troisième tunnel de premier protocole (TUN3) entre ladite seconde passerelle (BGW) et ladite première passerelle (AGW) ;
k) transmettre au moins lesdites informations de communication de réponse (RE-PAY) par l'intermédiaire dudit troisième tunnel premier protocole (TUN3) ;
l) recevoir au moins lesdites informations de communication de réponse (RE-PAY) dans ladite première passerelle (AGW) ;
m) paramétrer un quatrième tunnel de premier protocole (TUN4) entre ladite première passerelle (AGW) et ledit premier terminal (A1) ;
n) transmettre au moins lesdites informations de communication de réponse (RE-PAY) par l'intermédiaire dudit quatrième tunnel de premier protocole (TUN4) ;
o) recevoir au moins lesdites informations de communication de réponse (RE-PAY) dans ledit premier terminal (A1).

8. Procédé de communication selon la revendication 7, dans lequel :
avant ladite étape h) lesdites informations de communication de réponse (RE-PAY) sont au moins encapsulées avec un quatrième en-tête d'identification de type de transport comprenant au moins lesdites informations spécifiques au type de transport de troisième réseau second protocole (A1T-6-3) et avec un deuxième en-tête de second protocole comprenant au moins ladite adresse de premier terminal troisième réseau second protocole (A1A-6-3).

9. Procédé de communication selon l'une des revendications 7 ou 8, dans lequel :
ladite étape j) comprend l'encapsulation d'au moins lesdites informations de communication de réponse (RE-PAY) avec un cinquième en-tête d'identification de type de transport comprenant au moins lesdites informations spécifiques au type de transport de premier réseau premier protocole (A1T-G4-1), et avec un troisième en-tête de premier protocole comprenant au moins ladite adresse de première passerelle premier réseau premier protocole (AGWA-G4-1) selon ladite corrélation de mise en correspondance (BGW-MC).

10. Procédé de communication selon l'une des revendications 7 à 9, dans lequel :
ladite étape m) comprend le changement dudit cinquième en-tête d'identification de type de transport par un sixième en-tête d'identification de type de transport comprenant au moins lesdites informations spécifiques au type de transport de deuxième réseau premier protocole (A1T-P4-2), et le changement dudit troisième en-tête de premier protocole par un quatrième en-tête de premier protocole comprenant au moins ladite adresse de premier terminal deuxième réseau premier protocole (A1A-P4-2).

11. Procédé de communication selon l'une des revendications 7 à 10, dans lequel :
ladite étape o) comprend la détermination si un paquet reçu comprend un en-tête d'identification de type de transport comprenant lesdites informations spécifiques au type de transport de deuxième réseau premier protocole (A1T-P4-2).

12. Procédé de communication selon la revendication 11, dans lequel :
quand on détermine que ledit paquet reçu comprend un en-tête d'identification de type de transport comprenant lesdites informations spécifiques au type de transport de deuxième réseau premier protocole (A1T-P4-2), lesdites informations de communication de réponse (RE-PAY) sont désencapsulées au moins dudit quatrième en-tête de premier protocole et dudit sixième en-tête d'identification de type de transport.

13. Système de communication comprenant :
- un terminal de communication (A1) ;
- une première passerelle (AGW) ; et
- une seconde passerelle (BGW) ;
le système étant configuré pour fonctionner dans un système de communication plus large (SYS) comprenant un premier réseau (IN) mis en oeuvre en utilisant un premier protocole (IPv4), ledit premier réseau (IN) étant connecté à un deuxième réseau (PV4) mis en oeuvre en utilisant ledit premier protocole (IPv4) et à un troisième réseau (GV6) mis en oeuvre en utilisant un second protocole (IPv6) par l'intermédiaire des première et seconde passerelles respectives (AGW, BGW), pour fournir des informations de communication (PAY) entre le premier terminal (A1) dans ledit deuxième réseau (PV4) et un second terminal (B) dudit troisième réseau (GV6) dans lequel l'emplacement respectif des premier et second terminaux (A1, B) reste géographiquement sensiblement le même pendant une session de réseau de sorte que les terminaux (A1, B) n'exigent pas de procédures de mise à jour d'emplacement ou de procédures d'enregistrement pendant une session de réseau ;
lesdits premier et second protocoles (IPv4, IPv6) étant différents ;
lesdits premier et second réseaux (IN, PV4) utilisant ledit premier protocole (IPv4) pour l'adressage dans lesdits premier et deuxième réseaux (IN, PV4) ;
ledit troisième réseau (GV6) utilisant ledit second protocole (IPv6) pour l'adressage dans ledit troisième réseau (GV6) ;
lesdits premier au troisième réseaux (IN, PV4, GV6) comprenant respectivement des premières à troisièmes adresses ;
lesdites premières et deuxièmes adresses étant respectivement des adresses de premier réseau premier protocole et des adresses de deuxième réseau premier protocole respectivement sélectionnées à partir de plages d'adresses différentes dudit premier protocole (IPv4), respectivement une plage d'adresses publiques et une plage d'adresses privées ;
lesdites troisièmes adresses étant des adresses de troisième réseau second protocole ;
dans lequel le système est agencé de sorte que :
a) le terminal de communication (A1) est agencé pour paramétrer (S 7.1) un premier tunnel de premier protocole (TUN1) entre ledit premier terminal (A1) et ladite première passerelle (AGW), le premier tunnel de premier protocole (TUN1) étant paramétré par l'encapsulation d'un paquet de données conforme au second protocole (SA6, DA6, TH6, PAY) comprenant les informations de communication (PAY) avec un en-tête conforme au premier protocole (SA4, DA4, TH4) ;
b) le terminal de communication (A1) est en outre agencé pour transmettre (S 7.2) le paquet de données (SA4, DA4, TH4, SA6, DA6, TH6, PAY) par l'intermédiaire dudit premier tunnel de premier protocole (TUN1) ;
c) la première passerelle (AGW) est agencée pour recevoir (S 7.3) le paquet de données (SA4, DA4, TH4, SA6, DA6, TH6, PAY) dans ladite première passerelle (AGW) ;
d) la première passerelle (AGW) est en outre agencée pour paramétrer (S 7.4) un deuxième tunnel de premier protocole (TUN2) entre ladite première passerelle (AGW) et ladite seconde passerelle (BGW), le deuxième tunnel de premier protocole (TUN2) étant paramétré en traduisant l'en-tête conforme au premier protocole (SA4, DA4, TH4) du paquet de données (SA4, DA4, TH4, SA6, DA6, TH6, PAY) dans la plage d'adresses publiques ;
e) la première passerelle (AGW) est en outre agencée pour transmettre (S 7.5) le paquet de données (SA4, DA4, TH4, SA6, DA6, TH6, PAY) par l'intermédiaire dudit deuxième tunnel de premier protocole (TUN2) ;
f) la seconde passerelle (BGW) est agencée pour recevoir (S 7.6) le paquet de données (SA4, DA4, TH4, SA6, DA6, TH6, PAY) dans ladite seconde passerelle (BGW) et pour enlever l'en-tête conforme au premier protocole (SA4, DA4, TH4) du paquet de données ;
g) la seconde passerelle (BGW) est agencée pour transmettre (S 7.7) le paquet de données (SA6, DA6, TH6, PAY) par l'intermédiaire dudit troisième réseau (GV6) audit second terminal (B).

14. Système de communication selon la revendication 13, dans lequel :
le terminal de communication (A1) est en outre agencé, pendant le paramétrage (S 7.1), pour créer le paquet de données conforme au second protocole (SA6, DA6, TH6, PAY) en encapsulant au moins lesdites informations de communication (PAY) avec un premier en-tête d'identification de type de transport (TH6) comprenant au moins des informations spécifiques au type de transport de second protocole (A1T-6-3), et avec un premier en-tête de second protocole (SA6, DA6) comprenant au moins une adresse de premier terminal troisième réseau second protocole (A1A-6-3) et une adresse de second terminal troisième réseau second protocole (BA-6-3), et
l'en-tête conforme au premier protocole (SA4, DA4, TH4) comprend un deuxième en-tête d'identification de type de transport (TH4) comprenant au moins des informations spécifiques au type de transport de deuxième réseau premier protocole (A1T-P4-2), et un premier en-tête de premier protocole (SA4, DA4) comprenant au moins une adresse de premier terminal deuxième réseau premier protocole (A1A-P4-2) et une adresse de seconde passerelle premier réseau premier protocole (BGWA-G4-1).

15. Système de communication selon la revendication 14, dans lequel :
la première passerelle (AGW) est en outre agencée, pendant le paramétrage (S 7.4), pour changer ledit deuxième en-tête d'identification de type de transport (TH4) par un troisième en-tête d'identification de type de transport (TH4) comprenant au moins des informations spécifiques au type de transport de premier réseau premier protocole (A1T-G4-1), et pour changer ledit premier en-tête de premier protocole (SA4, DA4) par un deuxième en-tête de premier protocole (SA4, DA4) comprenant au moins une adresse de première passerelle premier réseau premier protocole (AGWA-G4-1) et ladite adresse de seconde passerelle premier réseau premier protocole (BGWA-G4-1).

16. Système de communication selon la revendication 15, dans lequel :
la seconde passerelle (BGW) est en outre agencée, pendant la réception (S 7.6), pour :
stocker ladite adresse de première passerelle premier réseau premier protocole (AGWA-G4-1), lesdites informations spécifiques au type de transport de premier réseau premier protocole (A1T-G4-1), et ladite adresse de premier terminal troisième réseau second protocole (A1A-6-3) dans ladite seconde passerelle (BGW).

17. Système de communication selon la revendication 16, dans lequel :
ladite adresse de première passerelle premier réseau premier protocole (AGWA-G4-1), lesdites informations spécifiques au type de transport de premier réseau premier protocole (A1T-G4-1), et ladite adresse de premier terminal troisième réseau second protocole (A1A-6-3) sont agencées pour être stockées dans une table de mise en correspondance.

18. Système de communication selon la revendication 17, dans lequel, dans ladite table de mise en correspondance :
une corrélation de mise en correspondance (BGW-MC) est stockée entre ladite adresse de premier terminal troisième réseau second protocole (A1A-6-3) et un couple de ladite adresse de première passerelle premier réseau premier protocole (AGWA-G4-1) et desdites informations spécifiques au type de transport de premier réseau premier protocole (A1T-G4-1).

19. Système de communication selon l'une des revendications 13 à 18, comprenant en outre le second terminal (B), dans lequel ledit système est en outre agencé de sorte que :
h) le second terminal (B) est agencé pour transmettre au moins des informations de communication de réponse (RE-PAY) par l'intermédiaire dudit troisième réseau (GV6) à ladite seconde passerelle (BGW) ;
i) la seconde passerelle (BGW) est en outre agencée pour recevoir au moins lesdites informations de communication de réponse (RE-PAY) ;
j) la seconde passerelle (BGW) est en outre agencée pour paramétrer un troisième tunnel de premier protocole (TUN3) entre ladite seconde passerelle (BGW) et ladite première passerelle (AGW) ;
k) la seconde passerelle (BGW) est en outre agencée pour transmettre au moins lesdites informations de communication de réponse (RE-PAY) par l'intermédiaire dudit troisième tunnel de premier protocole (TUN3) ;
l) la première passerelle (AGW) est en outre agencée pour recevoir au moins lesdites informations de communication de réponse (RE-PAY) ;
m) la première passerelle (AGW) est en outre agencée pour paramétrer un quatrième tunnel de premier protocole (TUN4) entre ladite première passerelle (AGW) et ledit premier terminal (A1) ;
n) la première passerelle (AGW) est en outre agencée pour transmettre au moins lesdites informations de communication de réponse (RE-PAY) par l'intermédiaire dudit quatrième tunnel de premier protocole (TUN4) ;
o) le premier terminal (A1) est en outre agencé pour recevoir au moins lesdites informations de communication de réponse (RE-PAY).

20. Système de communication selon la revendication 19, dans lequel :
le second terminal (B) est en outre agencé de sorte que, avant l'exécution de ladite opération h), lesdites informations de communication de réponse (RE-PAY) sont au moins encapsulées avec un quatrième en-tête d'identification de type de transport comprenant au moins lesdites informations spécifiques au type de transport de troisième réseau second protocole (A1T-6-3) et avec un deuxième en-tête de second protocole comprenant au moins ladite adresse de premier terminal troisième réseau second protocole (A1A-6-3).

21. Système de communication selon l'une des revendications 19 ou 20, dans lequel :
la seconde passerelle (BGW) est en outre agencée pour, pendant l'opération j), encapsuler au moins lesdites informations de communication de réponse (RE-PAY) avec un cinquième en-tête d'identification de type de transport comprenant au moins lesdites informations spécifiques au type de transport de premier réseau premier protocole (A1T-G4-1), et avec un troisième en-tête de premier protocole comprenant au moins ladite adresse de première passerelle premier réseau premier protocole (AGWA-G4-1) selon ladite corrélation de mise en correspondance (BGW-MC).

22. Système de communication selon l'une des revendications 19 à 21, dans lequel :
la première passerelle (AGW) est en outre agencée pour, pendant l'opération m), changer ledit cinquième en-tête d'identification de type de transport par un sixième en-tête d'identification de type de transport comprenant au moins lesdites informations spécifiques au type de transport de deuxième réseau premier protocole (A1T-P4-2), et pour changer ledit troisième en-tête de premier protocole par un quatrième en-tête de premier protocole comprenant au moins ladite adresse de premier terminal deuxième réseau premier protocole (A1A-P4-2).

23. Système de communication selon l'une des revendications 19 à 22, dans lequel :
le premier terminal (A1) est en outre agencé pour, pendant l'opération o), déterminer si un paquet reçu comprend un en-tête d'identification de type de transport comprenant lesdites informations spécifiques au type de transport de deuxième réseau premier protocole (A1T-P4-2).

24. Système de communication selon la revendication 23, dans lequel :
quand on détermine que ledit paquet reçu comprend un en-tête d'identification de type de transport comprenant lesdites informations spécifiques au type de transport de deuxième réseau premier protocole (A1T-P4-2), lesdites informations de communication de réponse (RE-PAY) sont désencapsulées au moins dudit quatrième en-tête de premier protocole et dudit sixième en-tête d'identification de type de transport.

25. Programme ayant des instructions conçues pour exécuter une ou plusieurs des étapes de procédé de l'une quelconque ou de plusieurs des revendications de procédé 1 à 12.

26. Produit formant programme informatique stocké sur un support lisible par ordinateur comprenant un moyen formant code conçu pour exécuter une ou plusieurs des étapes de procédé de l'une quelconque ou de plusieurs des revendications de procédé 1 à 12.
